# EUROPEAN PATENT APPLICATION

(11) **EP 1 484 701 A1**
(43) Date of publication of application: **08.12.2004**
(21) Application number: 03708555.2
(22) Date of filing: 12.03.2003
(51) Int. Cl.: G06F 17/60

(54) **SERVICE EXECUTION MODULE**

(30) Priority: 13.03.2002 JP 2002069362; 15.01.2003 JP 2003007684
(71) Applicant: MATSUSHITA ELECTRIC INDUSTRIAL CO., LTD., Kadoma-shi, Osaka 571-8501 (JP)
(72) Inventor: KAWAGUCHI, Kyoko, Setagaya-ku, Tokyo 156-0057 (JP); TAKAYAMA, Hisashi, Setagaya-ku, Tokyo 156-0043 (JP); OMORI, Motoji, Hirakata-shi, Osaka 573-0071 (JP); FUTA, Yuichi, Miyakojima-ku, Osaka 534-0002 (JP); YOKOTA, Kaoru, Ashiya-shi, Hyogo 659-0016 (JP)
(74) Representative: Grünecker, Kinkeldey, Stockmair & Schwanhäusser Anwaltssozietät
(86) International application number: PCT/JP2003/002893
(87) International publication number: WO 2003/077173

(57) **Abstract**

A service item registration area is provided in SE, and only a service server having a specific certificate can provide service using the service item registration area of SE. When processing using data of the service item registration area is performed, exchange of a message with a signature is always performed.

## Description

### Technical Field

The present invention relates to a service providing method using a secure module, a system for using an electronic value, for example, purchase of electronic ticket, the use, the transfer as one of the service, a using method, a program, an apparatus, and a storage medium on which the program is recorded.

### Background Art

In order to provide mobile service securely, there is a technique that a secure element (SE), which is a tamper resistant secure module such as an IC chip and the like, is inserted to a cellular phone, PDA to improve security. As an example of the IC chip to be used by being inserted to the cellular phone, an operator conventionally performed issuing and managing in the case of, for example, SIM for GSM. Moreover, In WAP (Wireless Application Protocol), the specification of the secure module having a signature function which is called WIN (WAP Identifier Module) is opened to the public. As one of installment of WIN, there is a format, that is, SWIN in which WIM is installed on the same chip as SIM, and regarding this case, the operator is also likely to perform issuing and managing.

Here, the electronic ticket service is largely divided into two types. One is a system that issues an electronic ticket, which in advance contains secret information of the cellular phone, PDA, and SE inserted thereto in itself, and the other is a system that issues an electronic ticket, which contains no secret information of these devices in itself (for example, NEC, press release (October, 3, 2002), a fundamental technology for mobile, mobile electronic ticket and membership card service basis, searched on January 14, 2003, Internet
<URL:http://www.nec.co.jp/press/ja/0210/0303-01. html,http://www.nec.co.jp/press/ja/0210/0303-06. html,http://www.nec.co.jp/press/ja/0210/0303-07. html>).

There is a large difference between these electronic ticket service systems in the operation of the transfer of ticket and the storage.

First, regarding the transfer, since the former contains information peculiar to SE in the ticket, processing via the server such as reissuing by the server is required to be performed in the case of transferring it to the other. As compared with this, the latter can perform transfer online via no server.

Next, regarding the storage, in the former case, information peculiar to SE is contained in the ticket and even if the third person seals ticket data, he/she cannot perform punch processing without having SE, with the result that only an illegal copy by an SE possessor may be prevented. For this reason, there is incorporated a mechanism that detects the illegal copy by the SE possessor in such a manner that a hash value of correct ticket data is stored in TRM to be punched against the ticket at the punching time, thereby making it possible to save ticket data without being encrypted. In the latter case, since this can be used in persons besides the SE possessor, ticket data must be encrypted to save the ticket to memory.

However, the following problems are left in these. 'Namely, firstly, since the tamper resistant secure module such as SE is expensive, there is a problem in sharing the SE issuing cost when SE is installed on the cellular phone and PDA to prove service. When the service provider bears the issuing cost, there is a need of a system that prevents the service provider, who does not bear the cost, from using SE. Moreover, there is a need of a business model that can perform issuing and managing of SE freely by persons besides the operator.

Secondly, when a service manager provides access to SE to the service provider, there is a problem in that access to SE must be limited for each part in connection with the service. For example, there is a need of a system that limits authority of processing such that an entity that receives permission as a ticket punching machine from the service manager can receive ticket punching service but cannot issue a new ticket.

Thirdly, to prevent the third person from illegally use the electronic ticket that can be locally transferred, ticket data must be encrypted and stored in memory besides the tamper resistant such as SE. For this reason, decoding is required every time when storing, displaying and using are executed and extra time corresponding to decoding is taken in connection with all processing time. In addition, as prior art in which there is no need of encrypting ticket data to be stored in the memory besides the tamper resistant such as SE, there is a system that issues the ticket which contains SE intrinsic information therein. However, this system has a problem in that reissue must be received via the server at the transferring time.

Fourthly, in order to improve load dispersion of payment processing at a ticket issuing time, two kinds of data must be issued and managed when a numbered ticket is first distributed and payment is performed, thereafter issuing a ticket.

Fifthly, when transfer processing is performed remotely, the content of the ticket must be transmitted by telephone, mail, FAX and the like in order to tell the party on the other end of communication what ticket is desirably transferred to.

Sixthly, with improvement in the function of the secure module, the system on the server side must be changed. The server side needs protocol that can support the device having a different performance.

### Disclosure of Invention

An object of the present invention is to provide a service execution module that is used in a secure mobile service system having means for limiting access to a secure element by use of the secure element. Moreover, another object of the present invention is to provide ticket service having scalability using this security mobile service system.

In order to achieve the above object, according to the present invention, there is provided a service execution module, which is a module that stores information for executing service wherein said module is formed of a resistant tamper storage medium, comparing service application storing means for storing an application for executing the service; service manager certificate storing means for storing a service manager certificate, which is a certificate of a service manager who manages said service; and service item storing means for storing a service item, which is information necessary to execute the service.

Namely, according to the present invention, firstly, the certificate of the service manager is stored to SE and sold, and only the service server, having a certificate in which a signature is verifiable by the certificate, can provide service using an area dedicated to the service of SE. Even when a new service area is generated on SE, the certificate of the service manager for that purpose is used. This makes it possible to prevent a third person from providing this service using SE.

In the above structure, "resistant tamper" indicates the mechanism that insures security (safety) in terms of software and hardware (physically), and a resistant tamper module corresponds to an IC card as one that is socially used. The above mechanism can be explained as follows. Namely, in view of software, software-type access to data in the storing area of the IC chip is made impossible unless there a legal guarantee, so that security can be attained. Moreover, in view of hardware, against hardware-type access to the IC chip, for example, such a forcible action that the card is disassembled and a signal line is connected to the memory area to read data, for instance, data in the memory is deleted or data is automatically broken to make it impossible to obtain data illegally, so that security can be attained.

Secondly, a communication partner storing area is provided in SE to make it possible to limit executable processing for each role recognized by the service manager described in the certificate. At the beginning of communication, the certificate of the communication partner is verified, and the role designated by the certificate is stored to the communication partner storing area provided in SE. When receiving a processing request from ME (mobile element such as a cellular phone, a PDA and the like), SE judges whether this is executable with reference to the value of the communication partner storing area.

Thirdly, a service item registration area is provided in an area dedicated to the service in SE. Moreover, such a protocol is provided that the service cannot be performed without exchanging the message with a signature in order to execute the service using data of the service item registration area.

Fourthly, such a processing protocol is provided that the ticket cannot be used without registration data registered in the service item registration area provided in SE. For this reason, for example, in ticket processing, the numbered ticket and ticket data may be the same. Since the ticket is invalid unless a correct registration protocol is executed to perform registration to the ticket registration area (service item registration area) provided in SE after payment processing, issue and management of the numbered ticket . are unnecessary.

Fifthly, there is provided such a processing protocol that SEs, each having the correct certificate, exchange the message with the signature of SE each other and the ticket excepting the ticket registered to the ticket registration area provided in SE cannot be used, so that it is possible to attach ticket data to mail and to transmit it to the transfer partner before transfer processing. The partner can display the ticket data to confirm the entire contents, and decide whether this ticket should be purchased.

Sixthly, there is provided such a protocol that security is not ensured only by encrypting the entire message and processing is performed using the service item registration area and the signature function. For this reason, processing sharing with ME is changed by an increase in speed of SE, an increase in capacity, and a reduction in cost, making it possible to support the service system on the service server side without changing it.

### Brief Description of Drawings

FIG. 1 is a block diagram illustrating a schematic structure of a secure mobile service system using SE according to Embodiment 1 of the present invention by modeling;
FIG. 2 is a model view of SE that a service manager issues according to Embodiment 1 of the present invention;
FIG. 3 is a model view of service that the service manager adds a service area onto issued SE according to Embodiment 1 of the present invention;
FIG. 4 is a model view in a case where the service manager performs management of ticket service according to Embodiment 1 of the present invention;
FIG. 5 is a view illustrating an example of SE authentication processing message according to Embodiment 2 of the present invention;
FIG. 6 is a view illustrating an example of a message in a case where SE performs authentication of service server according to Embodiment 2 of the present invention;
FIG. 7 is a view illustrating an example of a message in a case where SE and the service server perform mutual authentication according to Embodiment 2 of the present invention;
FIG. 8 is a view illustrating a message example of server authentication processing using a public key encryption according to Embodiment 2 of the present invention;
FIG. 9 is a view illustrating a message example of mutual authentication using a public key encryption according to Embodiment 2 of the present invention;
FIG. 10 is a model view of ticket data used in the ticket service of a secure mobile service system according to Embodiment 3 of the present invention;
FIG. 11 is a model view of ticket storage according to Embodiment 3 of the present invention;
FIG. 12 is a view illustrating a message example of SE corresponding to an issuer server according to Embodiment 3 of the present invention;
FIG. 13 is a view illustrating a message example of download processing according to Embodiment 3 of the present invention;
FIG. 14 is a view illustrating a message example of download processing using a confirmation message with a signature according to Embodiment 3 of the present invention;
FIG.15 is a view illustrating a message example of download processing using a delivery key according to Embodiment 3 of the present invention;
FIG. 16 is a view illustrating a message example of download processing using a public key encryption according to Embodiment 3 of the present invention;
FIG. 17 is view illustrating a message example of registration prove processing according to Embodiment 3 of the present invention;
FIG. 18 is a view illustrating a message example of ticket punch processing according to Embodiment 3 of the present invention;
FIG. 19 is a model view illustrating the ticket before being examined according to Embodiment 3 of the present invention;
FIG. 20 is a view of a message example of SE of ticket movement between SEs according to Embodiment 3 of the present invention;
FIG. 21 is a view illustrating a message example of ticket movement processing between SEs according to Embodiment 3 of the present invention;
FIG. 22 is a view illustrating a message example of ticket movement processing between SEs using a public key encryption according to Embodiment 3 of the present invention;
FIG. 23 is a view illustrating a message example of mix processing of server authentication and ticket download processing of the secure mobile service system according to Embodiment 4 of the present invention;
FIG. 24 is a view illustrating a mix message example of server authentication processing and ticket punch processing according to Embodiment 4 of the present invention;
FIG. 25 is a view illustrating a mix message example of mutual authentication processing and ticket movement processing between SEs according to Embodiment 4 of the present invention;
FIG. 26 is a view illustrating a mix message example of server authentication processing using SE with a low processing capability and download processing in a secure mobile service system according to Embodiment 5 of the present invention;
FIG. 27 is a view illustrating a mix message example of server authentication processing using SE with a low processing capability and ticket punch processing according to Embodiment 5 of the present invention;
FIG. 28 is a view illustrating a mix message example of mutual authentication processing using SE with a low processing capability and ticket movement processing between SEs according to Embodiment 5 of the present invention;
FIG. 29 is a view illustrating a message example of ticket download processing of a secure mobile service system according to Embodiment 6 of the present invention;
FIG. 30 is a view illustrating a message example of ticket punch processing according to Embodiment 6 of the present invention;
FIG. 31 is a view illustrating a message example of ticket movement processing of according to Embodiment 6 of the present invention;
FIG. 32 is a view illustrating a message example of ticket download processing corresponding to FIG. 29 according to Embodiment 7 of the present invention;
FIG. 33 is a view illustrating a message example of ticket punch processing corresponding to FIG. 30 according to Embodiment 7 of the present invention;
FIG. 34 is a view illustrating a message example of ticket movement processing corresponding to FIG. 31 according to Embodiment 7 of the present invention;
FIG. 35 is an illustration view of download processing in Embodiment 8 of the present invention;
FIG. 36 is an illustration view of illustrating ticket prove processing according to Embodiment 8 of the present invention;
FIG. 37 is an illustration view of ticket punch processing in Embodiment 8 of the present invention;
FIG. 38 is an illustration view of ticket.punch processing (exit processing) according to Embodiment 8 of the present invention;
FIG. 39 is an illustration view of ticket movement processing according to Embodiment 8 of the present invention;
FIG. 40 is an illustration view of communication partner management function processing according to Embodiment 9 of the present invention; and
FIG. 41 is an illustration view of error recovery processing according to Embodiment 9 of the present invention.

### Best Mode for Carrying Out the Invention

The following will specifically explain Embodiments of the present invention with reference to the drawings.

### <Embodiment 1>

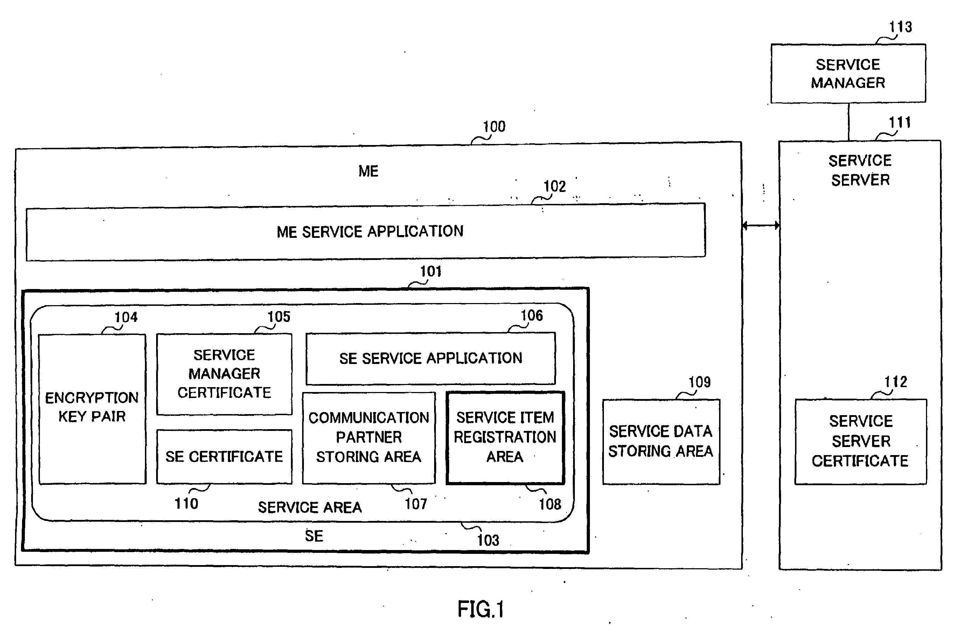

An explanation will be sequentially given of an issuing model of SE as working example 1, an authentication system of SE and a service server as working example 2, ticket service as working example 3, ticket service integrated with authentication as working example 4, and ticket service in the case of using SE with a low processing capability as working example 5. Embodiment 1 will explain the issue model of SE in a secure mobile service system using FIGS. 1 to 4. FIG. 1 is a block diagram illustrating a schematic structure of the secure mobile service system according to Embodiment 1 of the present invention by modeling. A mobile device ME 100 such as a cellular phone and PDA includes an ME service application 102, an SE 101, which is a tamper resistant module having an encryption processing function with signature processing, and a service data storing area 109.

Additionally, regarding the relationship between the SE 101 and the service data storing area 109, either one of them/both may be attachable and detachable, and either one of them/both may have two or more. Moreover, they may not be existed in the same media physically.

Further, regarding data exchange therebetween, when 101 and 109 are present in the same media physically, transmission and reception may be performed via the external section or may be directly performed via no external section even if transmission and reception are performed via an external sections such the ME service application 102. Moreover, according to the present invention, no serve data storing area 109 may be possible.

SE 101 includes a service area 103 that executes and manages a specific service. SE 101 stores an encryption key pair 104 for a signature. The encryption key pair 104 may be common to SE 101, or specified to the service area 103. The service area 103 stores a service manager certificate 105, which is a certificate of the service manager who manages service of the service area 103. The service manager certificate 105 may be common to SE 101, or specified to the service area 103. An SE certificate 110 is a certificate, which is obtained from a service manager 113 when SE desires to perform a specific service, and which is necessary for authentication at a service executing time.

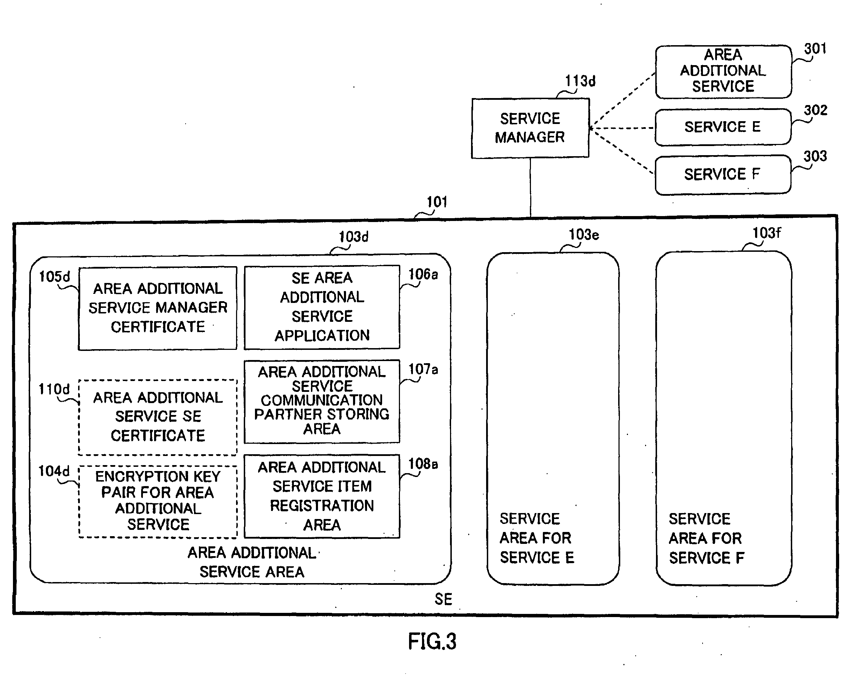

Here, regarding the relationship among the service manager certificate 105, the SE certificate, and the service area 103, various combinations may be possible depending on the form of service. In other words, when the SE possessor registers only one service, the number of service areas 103 is one (when there is no possibility of area addition [FIG. 3] to be described later), and in this case, no SE certificate 110 may be provided. While, when a plurality of services is registered, a plurality of service areas 103 is presented, and a combination of 105 and 110 can specify each service. In this case, when the number of services that is managed by the service manager, who issues the service manager certificate 105, is only one, no SE certificate 110 may be provided. While, regarding even the services that the same service manager manages, a different service manager certificate 105 may be provided.

An SE service application 106 performs communication with the ME service application 102 and executes authentication of a service server 111 and data processing to a service item registration area 108, which is defined by each service processing. The service item registration area 108 is an area for registering specific information to the service area 103.

A communication partner storing area 107 is an area where authentication of a service server is performed before the SE service application 106 performs service processing and a value, which is certified by the service server certificate that the service server possesses, is stored.

The SE service application 106 confirms whether processing is permitted with reference to the value of the communication partner storage area 107 before a data operation of the service item registration area 108, which is service processing, is performed.

The service manager 113 issues this SE and manages service to be provided using SE 101. The service server 111 obtains a service server certificate 112 from the service manager 113, and provides service to SE 101. The service server 111 and ME 100 may perform radio communications using a radio public network or local radio such as IrDA, Bluetooth though they may perform cable communications. As an example of the service server 111, there are a POS terminal, a kiosk terminal, a vending machine, a virtual shop on the network, a ticket punching machine, and the like.

In this way, before gaining access to the service item registration area 108, the SE service application 106 performs authentication processing to refer to the value of the communication partner storing area 107 storing the right certificated by the service certificate and executes processing only when a match exist, so that only the service server having the service certificate issued by the service manager 113 can execute secure service using the service item storing area 108 of SE 101.

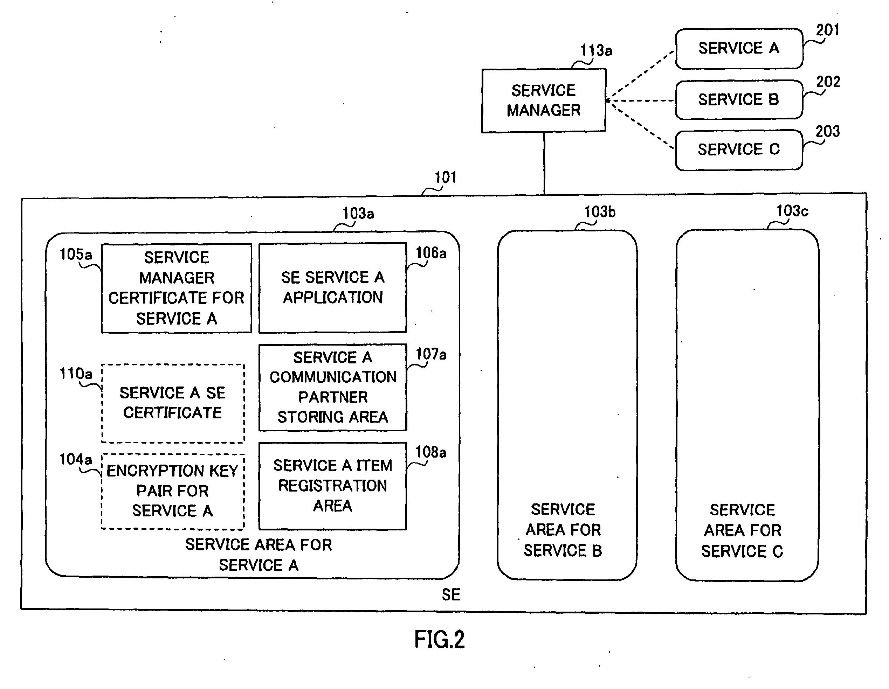

FIG. 2 illustrates a model view of SE 101 issued by the service manager 113. The service manager 113 can manage a plurality of services (201, 202, and 203). In connection with the respective services, it is possible to issue a plurality of kinds of service server certificates 112 according to the role in the service. Service areas (103a, 103b, 103c) specified for the respective services are provided in the SE 101 for the respective services. SE 101 having the plurality of service areas (103a, 103b, 103c) may be issued. The SE certificate 110 may be issued by the service area 103. The encryption key pair 104 may be issued by the service area 103. The service manager certificate 105 and encryption key pair 104 may be common to SE 10. Moreover, no SE certificate 110 may be provided depending on the service.

Thus, by providing the function of limiting the service server 111 that can gain access to the service item registration area 108 on the SE 101, the service manager 113 issues the service server certificate 112 to the service server 111, and the service server 111 can share the SE issuing and managing cost.

FIG. 3 illustrates Embodiment of service for which the service manger 113 adds the service area 103 on the issued SE101. It is assumed that a service manager 113d manages an area addition serve 301 and other services (302, 303). The service manager 113d may create only the area addition service 301 to the SE 101 and sell it, or add the area addition service 301 and the plurality of other services, for example, service F303 and sell them. For example, when a user, who has purchased this SE 101, gains access to the service manager 113d via the network and makes an application for service E302, the SE 101 authenticates the service manager via an SE area addition service application 106a using the area addition service manager certificate 105, and newly generates a service E area 103e when this is correct.

In this way, as one of SE service applications 106, the application (SE area addition service application 106a) for performing processing for adding service is provided at the time of issuing SE, making it possible for the service manager 113 to securely add and generate the service area 103 onto the SE 101 via the network after issuing. As a result, the service manager flexibly issues SE 101. Since the user can add only a necessary service later, the convenience is improved. Moreover, since the service server can add a service, which is started later, to the SE 101, which the user already possesses, the market is expanded.

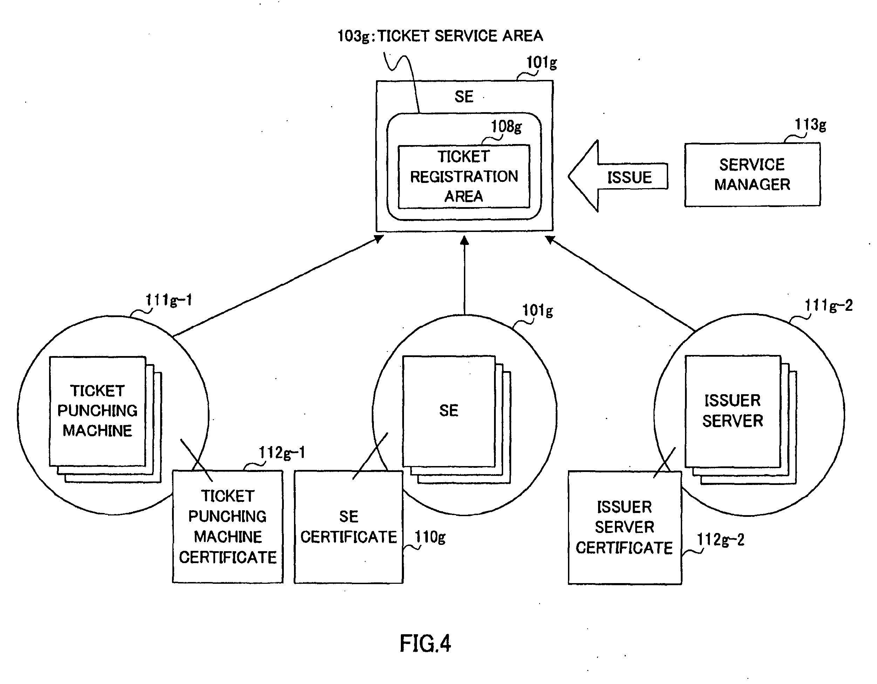

FIG. 4 is a model view in a case where the service manager performs management of ticket service. A service manager 113g, who provides a ticket service, issues a ticket service SE 101g with a ticket service area 103g. Moreover, three kinds of service server certificates 112 including an issuer server certificate 112g-2 for a ticket issuer, a ticket punching machine certificate 112g-1 for a ticket punching machine, an SE certificate 110g for SE are issued. Here, SE means here SE that can perform processing for moving the ticket between SEs. In a case where the ticket does have to be moved between SEs, the SE certificate 110g may not be issued.

When obtaining the ticket punching machine certificate 112g-1 from the service manager 113g, a ticket punching machine 111g-1 can execute only processing relating to a ticket punching to the ticket registration area 108a of SE 101g. When obtaining an issuer server certificate 112g-2 from the service manager 113g, an issuer server 111g-2 can execute only processing, which includes issue of a new ticket, exchange of a ticket and return, to the ticket registration area 108a of SE 101g. When obtaining the SE certificate 110g from the service manager 113g, the SE 101g can execute only processing relating to ticket movement to the SE 101g possessed by the SE certificate 110g.

In this way, it is possible to limit access to the ticket registration area 108g of SE 101g only to the possessors of the issuer server certificate 112g-2, the ticket punching machine certificate 112g-1, and the SE certificate 110g that are issued from the service manager. Moreover, the service server certificate 112 is issued for each of the plurality of roles, making it possible to limit processing to the ticket registration area 108g according to the role in the service. Moreover, the service manager 113g can perform flexible management such as a change in an issue fee according to the kind of the service server certificate 112 to be issued.

### <Embodiment 2>

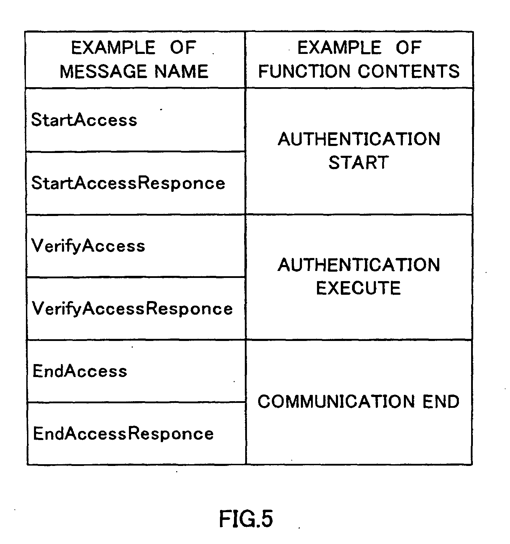

Embodiment 2 will explain the structure of the authentication of the SE 101 and the service server 111 with reference to FIGS. 5 to 9.

FIG. 5 is a view illustrating an example of SE authentication processing message. This authentication processing message is largely divided into three of "authentication start", "authentication execution", and "communication end." When authentication succeeds at the authentication execution, the right certificated by the service server certificate 112 is stored to the communication partner storing area 107. At the communication end, the value of the communication partner storing area 107 is deleted.

In this way, service processing, which is peculiar to the service to access the service item registration area 108, and authentication processing are separated from each other, making it possible to share authentication processing in the case of the SE 101 having the plurality of service areas 103 and to perform efficient installment.

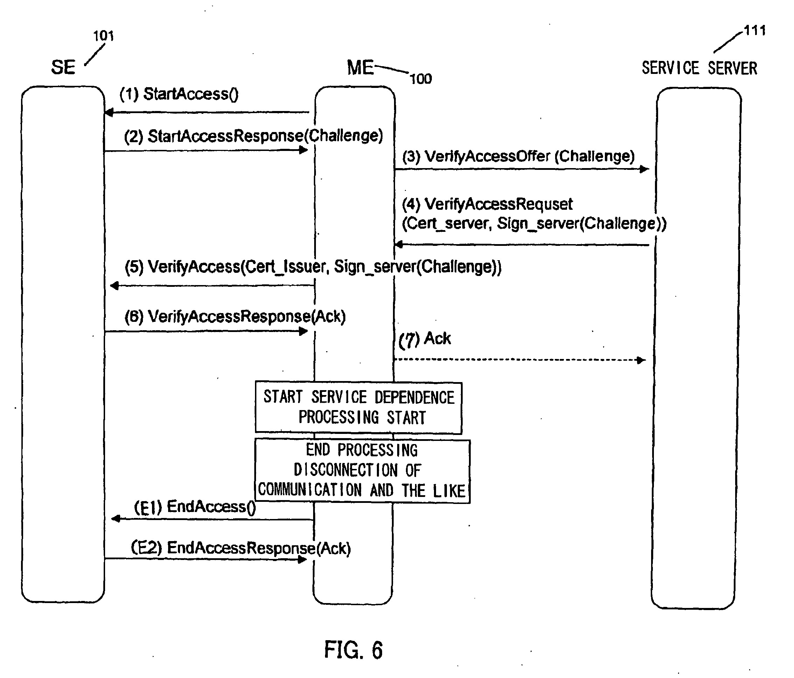

FIG. 6 is a view illustrating an example of a message in a case where SE 101 performs authentication of service server. In this authentication processing operation, first, when the ME 100 transmits a message Start Access, which requests the start of authentication, to the SE 101 in (1), the SE 101 generates a random number Challenge and sent it back to the ME 100 in (2). The ME 100 transmits the random number Challenge to the service server 111 in (3). The service sever 111 puts signature to the random number Challenge (Sign_SErver(Challenge)) and sends the signed the random number Challenge (Sign_SErver (Challenge)) to the ME 100 with the server certificate 112 (Cert_SErver) in (4). The ME 100 transmits the Sign_SErver(Challenge) and Cert_SErver received from the service server 111 to the SE 101 in (5). The SE 101, which has received Sign_SErver (Challenge) and Cert_SErver from the ME 100, verifies Cert_SErver using the service manager certificate 105 to verify the signature of Challenge and the value, and when they are correct, the SE 101 stores the right of service server 111 certificated by Cert_SErver to the communication partner storing area 107. Thereafter, the SE 101 transmits a message, which reports the result of processing, to the ME 100 in (6). The ME 100 may acknowledge the service server 111 of the authentication result in (7). After that, processing peculiar to the service is performed. When processing of the service ends or there is disconnection in communication, the ME 100 transmits a message indicative of communication end to the SE 101 in (E1). In contrast to this, the SE 101 deletes the value of the communication partner storing area 107 and acknowledges the ME 100 of the processing result in (E2).

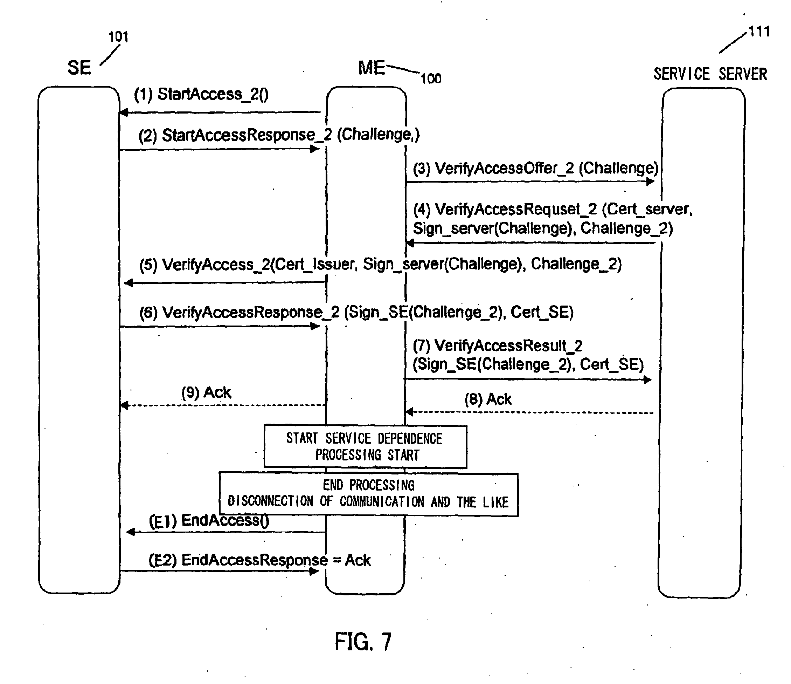

FIG. 7 is a view illustrating an example of a message in a case where the SE 101 and the service server 111 perform mutual authentication.

This mutual authentication processing operation is the same as FIG. 6 up to (3). In (4), the service server 111 transmits the random number Challenge _2 to the ME 100 in addition to Sign_SErver (Challenge) and Cert_SErver. In (5), the ME 100 transmits the random umber Challenge_2, Sign_SErver (Challenge) and Cert_SErver, which are received from the service server 111, to the SE 101. The SE 101, which has received these parameters, verifies Cert_SErver using the service manager certificate 105 to verify the signature of Challenge and the value, and when they are correct, the SE 101 stores the right of service server 111 certificated by Cert_SErver to the communication partner storing area 107. In addition, in (6), the service sever 111 puts signature to the random number Challenge_2 (Sign_SErver(Challenge_2)) and sends it to the ME 100 with the SE certificate 110 (Cert_SE). The EM 100 transmits these parameters to the service server 111 in (7). The service server 111, which has received these parameters in (7), verifies Cert_SErver to verify the signature of Challenge-2 and the value. The service server 111 may acknowledge the ME 100 of the processing result in (8). Moreover, the ME 100 may acknowledge the SE 101 of the processing result in (9). The afterward communication end processing is the same as FIG. 6. In other words, when processing of the service ends or there is disconnection in communication, the ME 100 transmits a message indicative of communication end to the SE 101 in (E1). In contrast to this, the SE 101 deletes the value of the communication partner storing area 107 and acknowledges the ME 100 of the processing result.

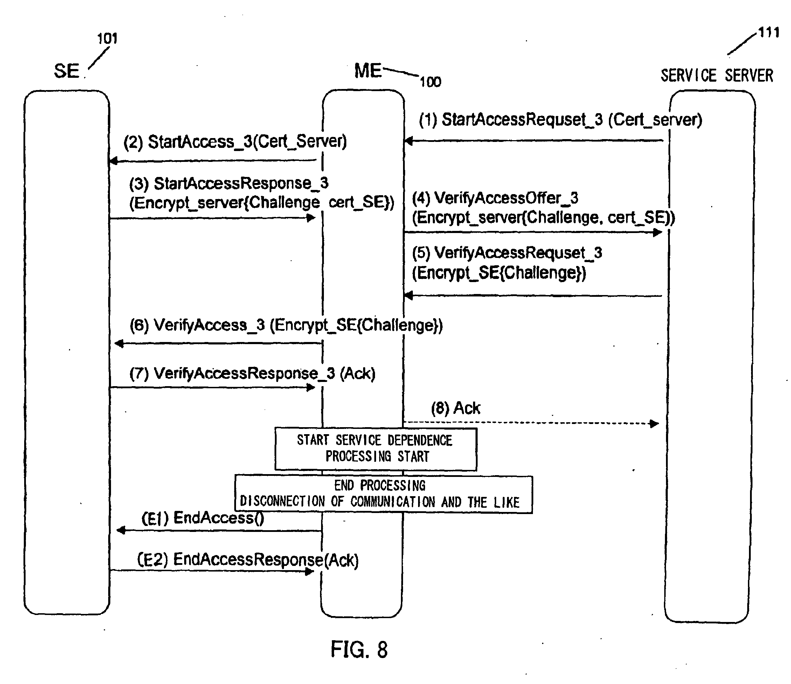

FIG. 8 is a view illustrating a message example of server authentication processing using a public key encryption. In the server authentication processing operation, the service server 111 transmits the service server certificate 112 (Cert_SErver) to the SE 101 via the ME 100 ( (1) and (2)). The SE encrypts the generated random number Challenge and the SE certificate 110 (Cert_SE) by the public key obtained from the transmitted Cert_SErver, and send them to the service sever 111 ((3) and (4)). The service server 111 decodes the message, encrypts Challenge by the public key of SE obtained from Cert_SE, and transmits it to the SE 101 via the ME 100 ((5) and (6)). The SE 101 may acknowledge the ME 100 of the processing result. The communication end processing ((E1) and (E2)) is the same as FIG. 6.

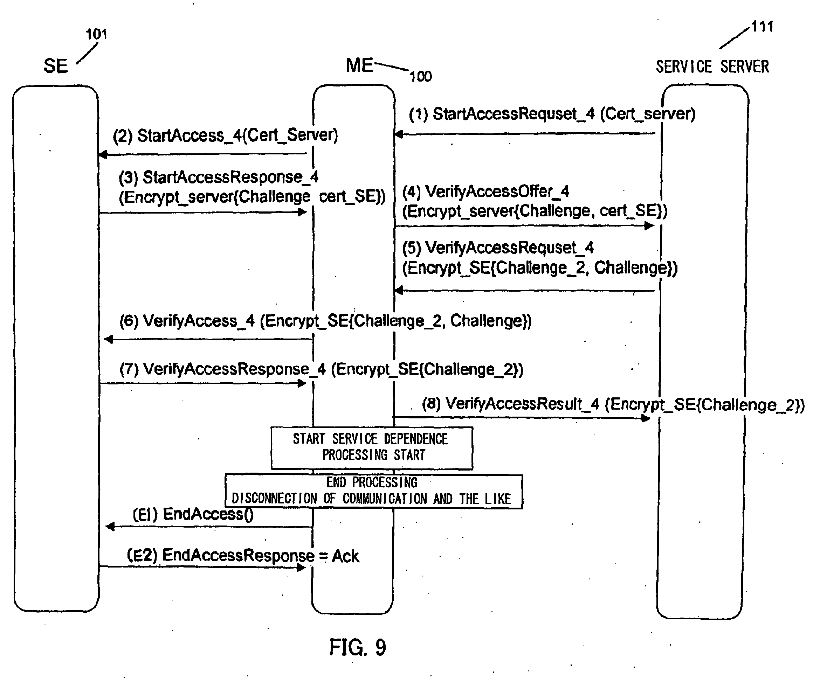

FIG. 9 is a view illustrating a message example of mutual authentication processing using a public key encryption. This mutual authentication processing operation is the same as FIG. 8 up to (4). In the message in (5), the service server 111 encrypts Challenge and the random number Challenge _2 by the public key of SE and transmits them to the SE 101. The SE 101 decodes the message, verifies Challenge, encrypts Challenge_2 by the public key of the service server 111, and transmits it ((7) and (8)). The communication end processing ((E1) and (E2)) is the same as FIG. 6.

In this way, the service manager 113 performs authentication with the SE 101 using the issued service server certificate 112, making it possible to limit access to the SE 101.

### <Embodiment 3>

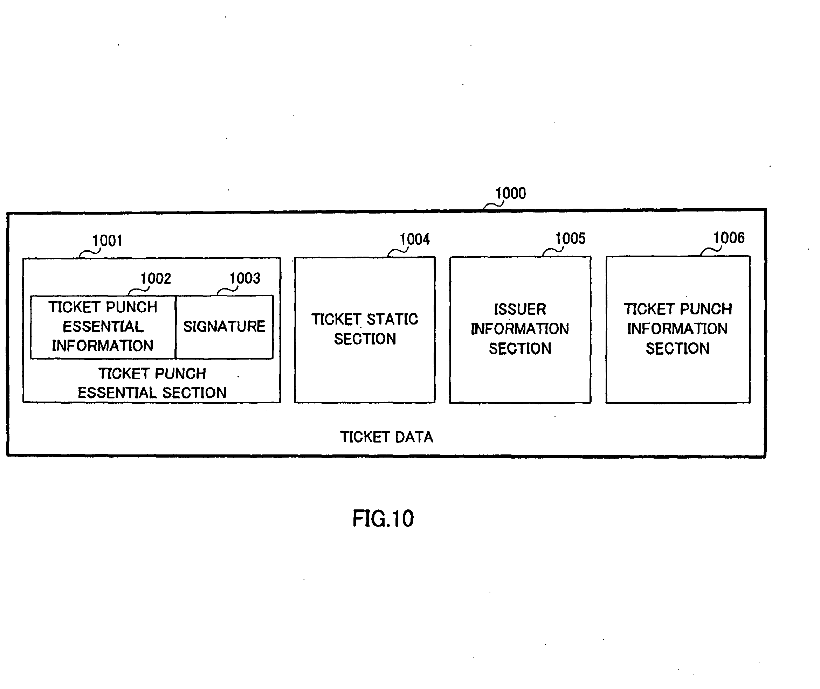

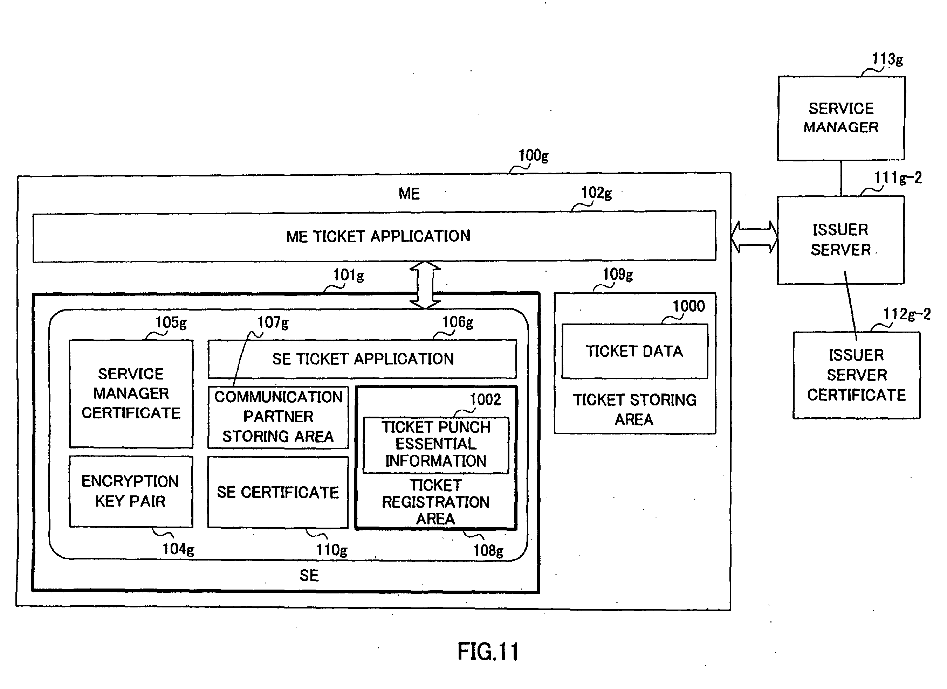

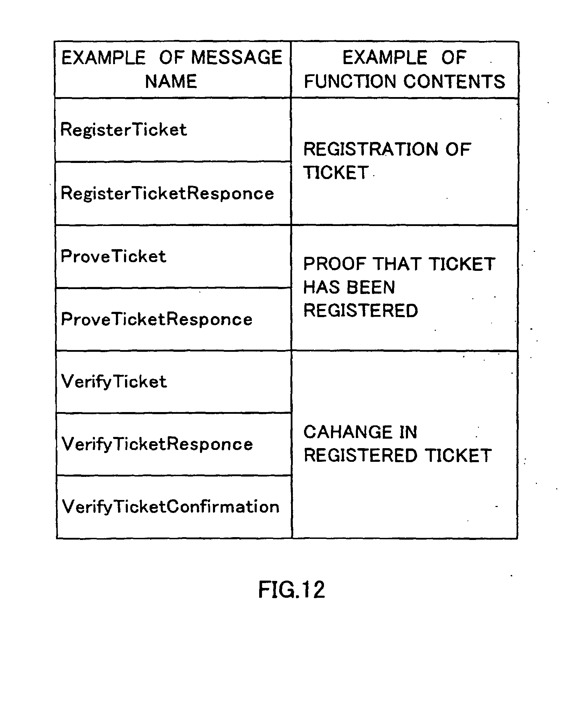

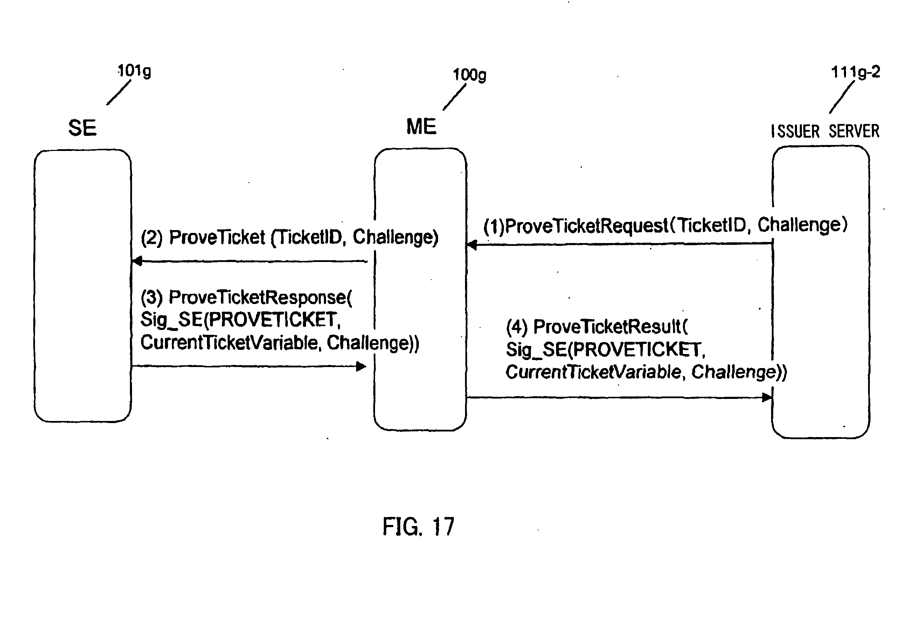

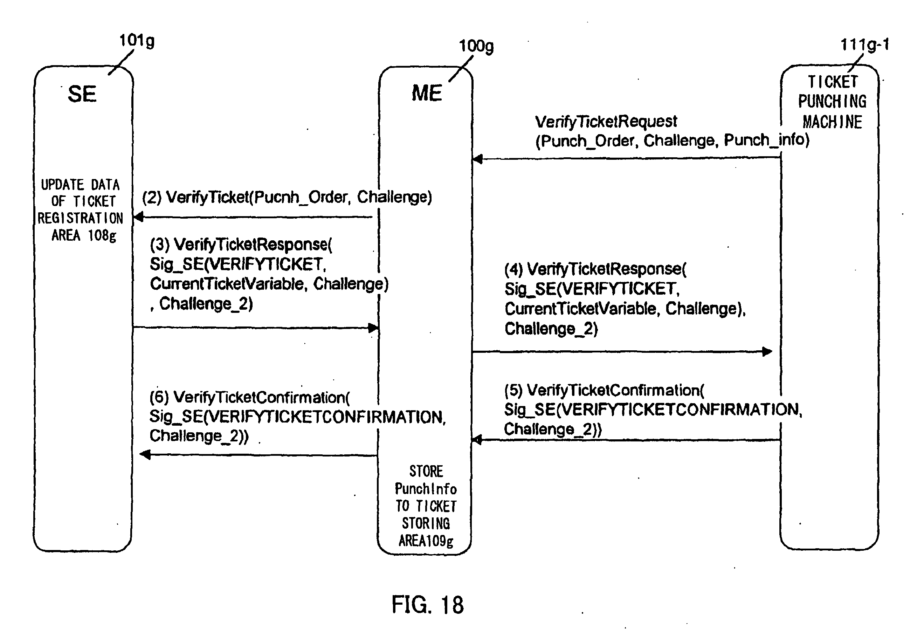

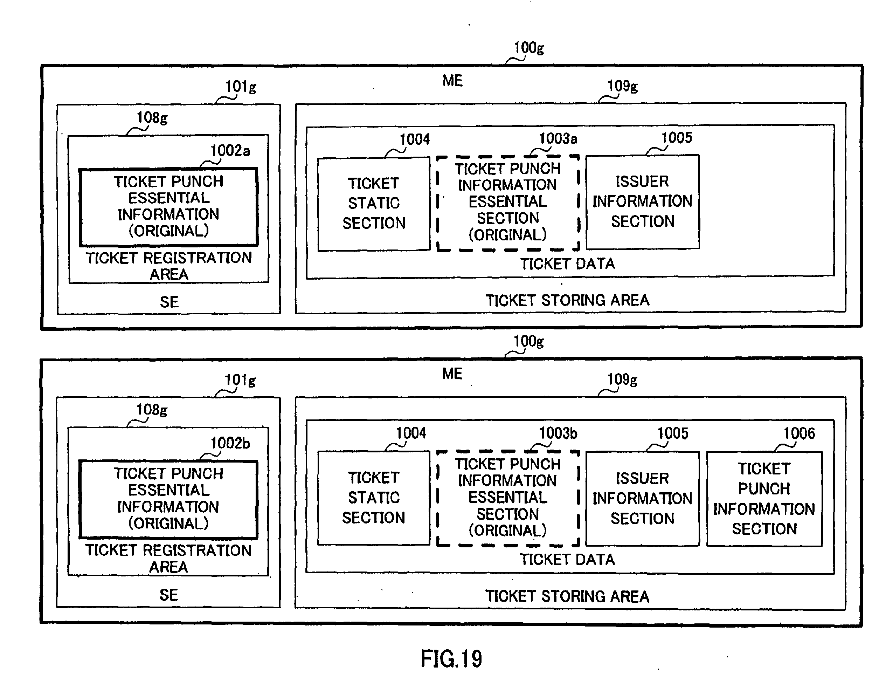

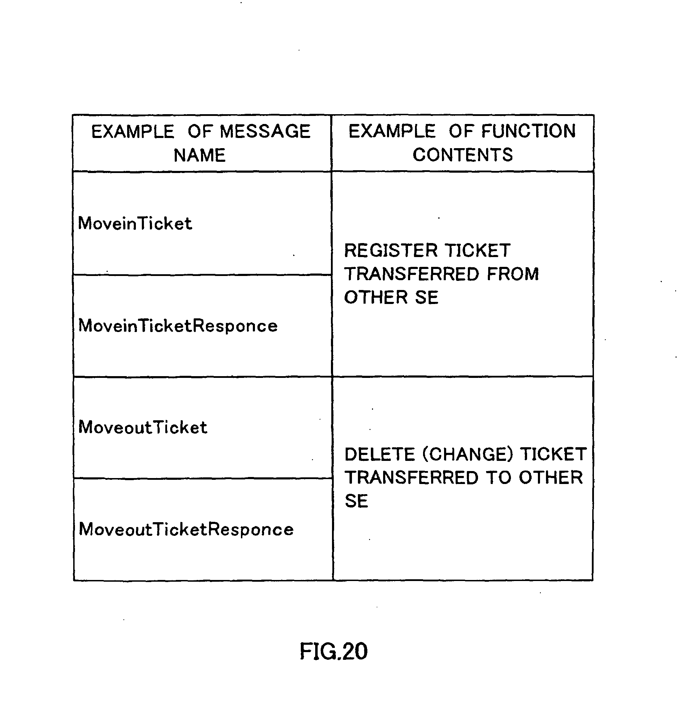

Embodiment 3 will explain ticket service using a secure mobile service system with reference to FIGS. 10 to 22. Working example 1 will explain ticket data using FIGS. 10 and 11, working example 2 will explain ticket download using FIGS. 12 to 16, working example 3 will explain processing for verifying storage of stored ticket data using FIG. 17, working example 4 will explain ticket punch processing using FIGS. 18 and 19, and working example 5 will explain ticket movement processing using FIGS. 20 to 22.

### (Working example 1)

An explanation will be given of ticket data and storage to the SE 101 using FIGS. 10 and 11. First, ticket data will be explained using FIG. 10. Ticket data 1000 (Ticket) is composed of a ticket punch essential section 1001 (Ticket_Variable), a ticket static section 1004 (Ticket_S), an issuer information section 1005 (Issuer_Info), and a ticket punch information section 1006 (Punch_info). Each section has a common ticket ID (TicketID). The ticket punch essential section 1001 (Ticket_Variable) is composed of a ticket punch essential information 1002 (Ticket_Variable) and a signature 1003 relating thereto. The signature 1003 may be one of the SE 101, one of the ticket punching machine 111g-1, or one of the issuer 111g-2. The ticket punch essential section 1001 includes a ticket ID (TicketID), the number of valid times (ValidTime), a valid period (ValidPeriod), and the other information (otherInfo) essential for ticket punching. Regarding the other information (otherInfo) essential for ticket punching, for example, in a train ticket, an entrance station and its time and the like are included. In this way, time information such as the number of valid times, valid period and the like and spatial information such as an entrance station, a concert place and the like are suitably included in accordance with the contents of the ticket punch processing.

The ticket punch essential section 1001 (Ticket_Variable) is essential for the ticket data 1000 (Ticket), but the ticket static section 1004 (Ticket_S), the issuer information section 1005 (Issuer_Info), and the ticket punch information section 1006 (Punch_info) may not be provided or a plurality of each of these items may be provided.

The ticket static section 1004 (Ticket_S) is one that is obtained when the issuer server 111g-2 places a signature to ticket static information (TicketStatic). The ticket static information (TicketStatic) includes information on this ticket, display information to the user, and the like.

The issuer information section 1005 (Issuer_Info) is one that is obtained when the issuer server 111g-2 places a signature to additional information (additionalInfo). The additional information (additionalInfo) includes additional information to this ticket to be sent from the issuer, and other service guidance to the user having this ticket. The issuer information section 1005 (Issuer_Info) is included in the ticket at the issuing time, or transmitted from the issuer by mail later, or the user can download it to be added.

The ticket punch information section 1006 (Punch_info) is one that is obtained when the ticket punching machine 111g-1 places a signature to the additional information (additionalInfo). The additional information (additionalInfo) can be considered to include additional information from the ticket punching machine, for example, not only log record of the ticket punching but also the latest cast in the concert or mix information of each attraction in the amusement part.

The above contents can be described as follows:

Ticket data: Ticket = Ticket_S, Ticket_V, Punch_info, Issuer_Info, Ticket Static section: Ticket_S = Sign_Issuer (TicketStatic), Ticket essential Section: Ticket_Variable = Sign_Issuer (TicketVariable) or Sign_Verifier (Ticket Variable), or Sign_SE (TicketVariable), Issuer Information section: Issuer_Info = Sign_Issuer (additionalInfo), Punch Information section: Punch_info = Sign_Verifier (additionalInfo), Ticket essential information: TicketVariable = TicketID, Validtime, ValidPeriod, otherInfo.

In this way, the ticket data 1000 is made up of the issuer server 111g-2 having a common ticket ID, SE 101g, and data with the signature of the ticket punching machine 111g-1, and structured to perform an increase and decrease flexibly.

An explanation will be next given of the storage of ticket data to the SE 101 using FIG. 11. When storage processing of ticket data 1000 (Ticket) to the SE 101g succeeds, ticket punch essential information 1002 (TicketVariable) is stored to the ticket registration area (108g), and ticket data 1000 (Ticket) is stored to the ticket storing area 109g.

In this way, ticket punch essential information 1002 (TicketVariable) is stored to the ticket registration area (108g) of the SE 101, eliminating the need for encrypting ticket data 1000 (Ticket) even when ticket data 1000 (Ticket) is stored onto memory, which is not tamper resistant. The reason is that ticket punch processing cannot be performed unless there is a message that proves the storage to the ticket registration area (108g) and a copied ticket cannot be used.

For this reason, the user can copy ticket data 1000 (Ticket) freely and attach it to the mail to transmit to the friend. When wishing to hand the ticket over the friend, he/she can transmit the ticket to the friend by mail and the like and perform actual processing for ticket movement after the friend views data.

Moreover, at the ticket issuing time, the issuer server 111g-2 describes information, which indicates that this ticket will be valid when payment is made within a designated period, and information including an access destination of payment in the issuer information section 1005 (Issuer_Info). Then, ticket data is transmitted to the user by mail. When the user, who wishes to purchase ticket data 1000, finishes payment processing according to information described in the issuer information section 1005 (Issuer_Info), registration processing of SE 101 to the ticket registration area 108g is executed, so that a valid ticket is obtained. At the time of registration processing, it is unnecessary to download the ticket data 1000 (Ticket) and only registration processing may be performed.

This increases in the degree of freedom when the issuer server 111g-2 promotes the ticket. Moreover, the issuer server 111g-2 does not have to issue and manage the numbered ticket before payment. and the ticket after payment, separately.

### (Working example 2)

The following will explain ticket downloading using FIGS. 12 to 16. Processing for order and purchase may be performed before the ticket is downloaded. Access from the server such as a PUSH service may be carried out. Authentication due to challenge and response may be performed by the issuer sever 111g-2 and ME 100g before the download processing is started. The authentication method explained in Embodiment 2 may be used.

FIG. 12 is a view illustrating an example of an interface for processing that is performed by the SE 101g and the issuer server 111g-2. This broadly has three functions. They are registration of a new ticket to the ticket registration area 108g, proof that registration has been made to the ticket registration area 108g, and a change in the ticket that is registered to the ticket registration area 108g. Among these, the change in the ticket that is registered to the ticket registration area 108g will be explained in working example 3.

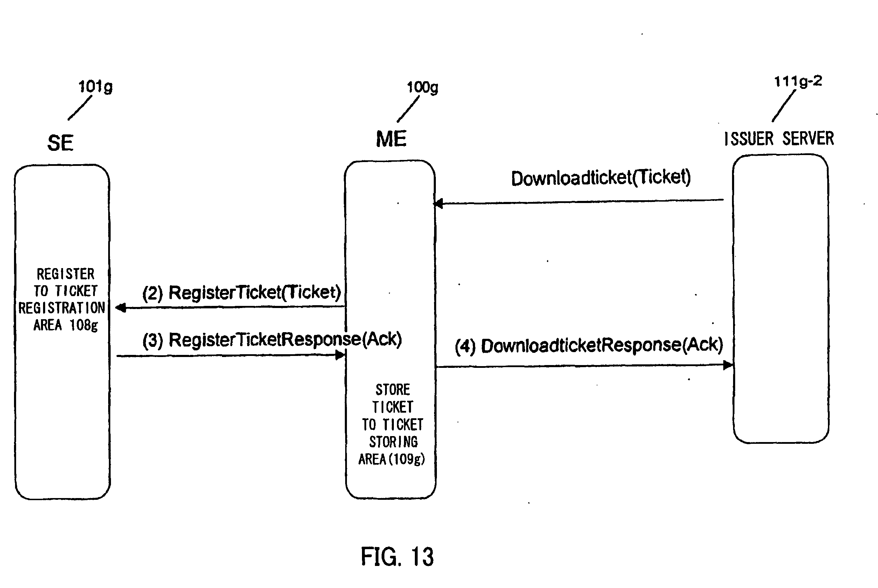

FIG. 13 is a view illustrating a message example in which a new ticket is downloaded and registered to the ticket registration area 108g. In this figure, it is assumed that authentication processing explained in Embodiment 2 has already succeeded. Moreover, it is assumed that a secure communication path of a transport layer is ensured between the issuer server 111g-2 and the ME.

First of all, ticket data 1000 is transmitted to SE 101g from the issuer server 111g-2 via ME 100g ( (1) and (2)), and the SE 101g registers ticket punch essential information 1002 (TicketVariable) to the ticket registration area 108g of the SE 101. The SE 101g may send acknowledgment of the registration processing result ((3) and (4)).

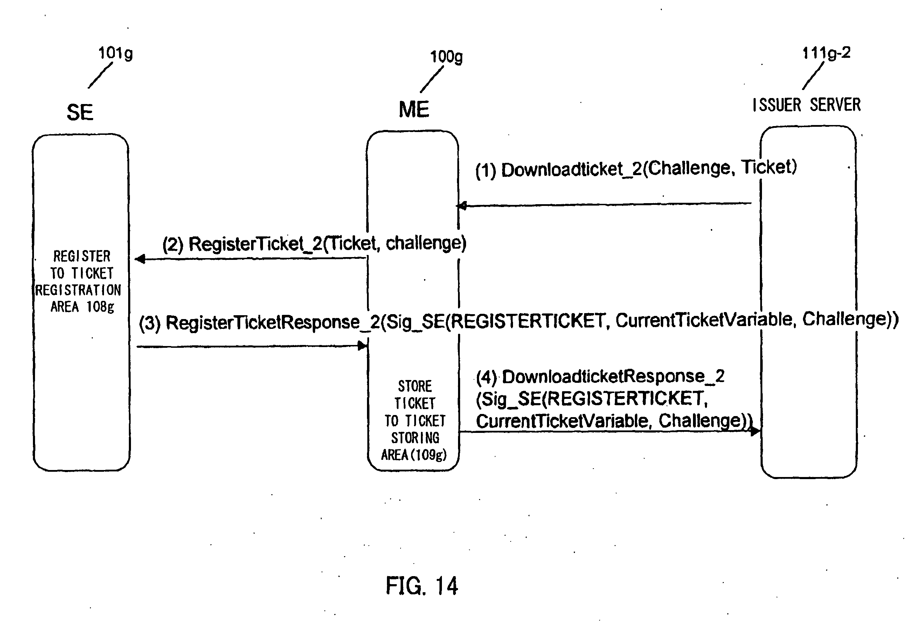

FIG. 14 is a view illustrating an example in which the SE 101g sends a message with a signature to the acknowledgement of the registration processing result. In this figure, it is assumed that authentication processing explained in Embodiment 2 has already succeeded. Moreover, it is assumed that a secure communication path of a transport layer is ensured between the issuer server 111g-2 and the ME.

First of all, ticket data 1000 and random number Challenge are transmitted to SE 101g from the issuer server 111g-2 via ME 100g ((1) and (2)), and the SE 101g verifies ticket data 1000 and registers ticket punch essential information 1002 (TicketVariable) to the ticket registration area 108g of the SE 101. The verification of ticket may be carried out by the ME 100g. The SE 101g places a signature to a flag, which is indicative of a response to a ticket registration request, registered ticket punch essential information 1002 (CurrentTicketVariable) and Challenge (Sign_SE(REGSTERTICKE, CurrentTicketVariable, Challenge)), sends it back ((3) and (4)). The issuer server 111g-2 verifies the signature of SE to verify the values of CurrentTicketVariable and Challenge. The ME 100g may store the ticket to the ticket storing area 109g after transmission in (4).

In this way, the issuer server 111g-2 can confirm the ticket punch essential information 1002 (CurrentTicketVariable) registered in the SE 101g. Moreover, since the random number Challenge is included therein, it can be confirmed that this is the current registration information.

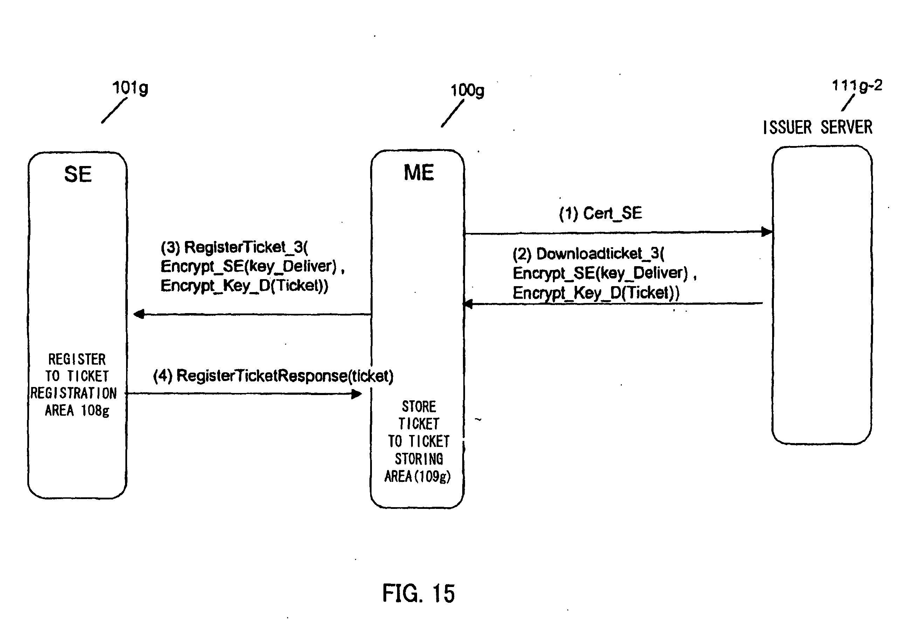

FIG. 15 is a view illustrating an example of a download message using a delivery key. In this example, ticket data 1000 is encrypted by the delivery key (Key_Deliver), the delivery key (Key_Deliver) is encrypted by a public key 104d of the SE 101 and downloaded to the SE 101 from the issuer server 111g-2 ((1) and (2)). The SE 101g decrypts ticket data 1000 after decrypting the delivery key, and verifies the ticket, and registers the ticket punch essential information 1002 to the ticket registration area (108g) of the SE 101 ((3)). In (4), when receiving the decrypted ticket from the SE 101g, the ME 100g stores the ticket to the ticket storing area 109g.

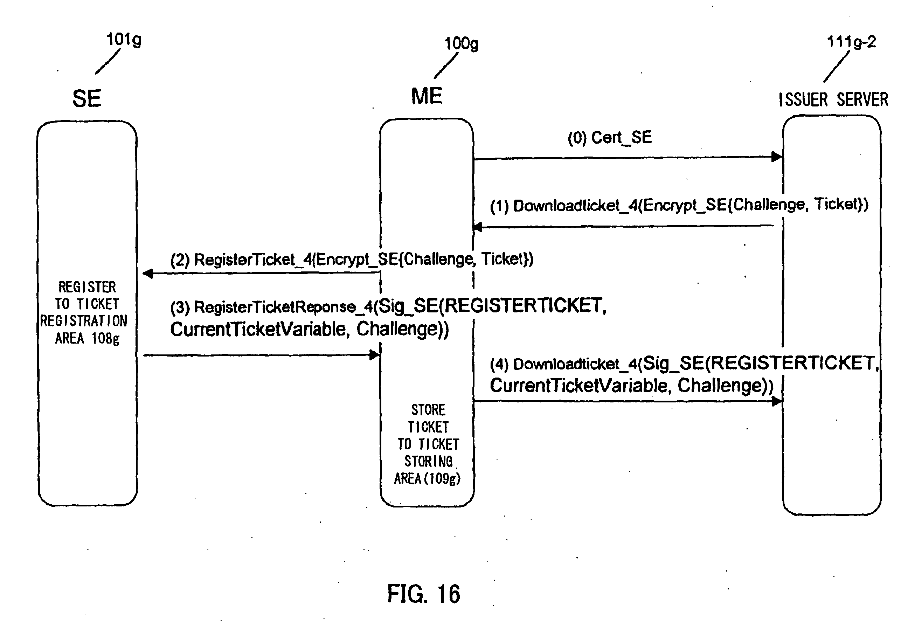

FIG. 16 is a view illustrating an example of a download message using a public key encryption. In this example, first of all, the SE certificate 110g is transmitted to the issuer server 111g-2 from the ME 100g (0). The issuer 111g-2 encrypts the random number Challenge and ticket data 1000 by the public key of SE 101 to transmit ((1) and (2)).

### (Working example 3)

The following will explain processing for proving ticket data registered in the ticket registration area 108g using FIG. 17. In FIG. 17, when receiving a reregistration request of the ticket caused at the time of failure in registration processing due to a communication error from SE, the issuer server 111g-2 shows processing for confirming whether there is really no registration to the ticket registration area 108g. When receiving the ticket ID and Challenge from the issuer server 111g-2 ((1) and (2)) to search the ticket ID corresponding to the ticket registration area 108g and there is registration, the SE 101g places a signature to current registration data (CurrentTicketVaraible), Challenge, and a flag, which is indicative of a message that responses to a registration proof request, (Sign_SE(PROVETICKET, CurrentTicketVariable, Challenge)), and transmits them to the issuer server 111g-2 ((3) and (4)). The issuer server 111g-2 verifies the signature to verify the values of CurrentTicketVariable and Challenge.

In this way, the use of this function makes it possible for the issuer server 111g-2 to confirm whether registration really fails even when the reregistration request is sent from the SE 101g. Moreover, this function makes it possible to omit messages (3) and (4) shown in FIG. 14 and to increase speedup in download processing at the issuing time.

Not only the issuer server 111g-2 but also the ticket punching machine 111g-1 can be used to confirm whether there is a ticket to be supported.

In this example, the ticket ID is designated, but it can be considered that a plurality of registration proof can be obtained at one time by providing pattern match designation to the ticket ID.

Moreover, in this example, the signature is placed to the current registration data (CurrentTicketVariable), Challenge, and a flag indicating a message responding to the registration proof request and turned, but a case of only the ticket ID or a case of only the ticket ID and Challenge can be considered.

Moreover, there can be considered a case in which the kind of data is changed depending on the kind of the service server 111. For example, in the issuer server 111g-2, the signature is placed to the current registration data (CurrentTicketVariable), Challenge, and a flag indicating a message responding to the registration proof request and turned, and in the ticket punching machine, it can be considered that the signature is placed to the ticket ID, Challenge, and a flag indicating a message responding to the registration proof request and turned. Since a flag indicating a message responding to the registration proof request is included in the signature data, this can not be used in other processing.

This function makes it possible for the service server 111 to know current registration data without changing the contents registered in the service item registration area 108g.

### (Working example 4)

The following will explain ticket punch processing using FIGS. 18 and 19. FIG. 18 is a view illustrating an example message of ticket punch processing. In this example, first, the ticket punching machine 111g-1 generates a punch order (Punch_Order). The punch order is data in which a signature of the ticket punching machine 11g-1 is placed to PunchOrder. Here, it is assumed that PunchOrder is one that designates a value (UpdatedTicketVariable) of updated ticket punch essential information. In addition to this, a method for designating an amount of increase and decrease can be considered.

First of all, the ticket punching machine 111g-1 transmits punch order (Punch_Order), the random number Challenge, and the ticket punch information section 1006 (Punch_Info) to the ME 100g ((1)). The ME 101g may not send the ticket punch information section 1006 to the SE 101g. The SE 101g verifies the signature of punch order (Punch_Order) received in (2), and updates the corresponding data registered in the ticket registration area 108g as designated by punch order (Punch_Order). The SE 101g transmits updated data (CurrentTicketVariable) registered to the ticket registration area, the random number Challenge, data(Sign_SE (VERIFY TICKET,CurrentTicketVariable, Challenge)) signed to a flag indicative of a message responding to a changed request, the random number Challenge_2 to the ticket punching machine 111g-1 ((3) and (4)). The ticket punching machine 111g-1 verifies the signature to verify the values of CurentTicket Variable and Challenge, places the signature the random number Challenge_2, PunchOrder, and a flag, which is a message that confirms a message responding to a changed request, and sends back them to the SE 101g ((5) and (6)). Here, PunchOrder may not be included. Moreover, the flag, which is a message that confirms the message responding to a changed request, may not be included. Further, in (3) and (4), Challenge_2 may be provided. In this case, (5) and (6) may not be provided.

FIG. 19 will explain a storage model of a ticket before and after ticket punch processing. In this example, in a state before the ticket punching, a ticket punch essential information section 1002a is registered in the ticket storing area 109a, and the ticket static section 1004, a ticket punch information essential section 1003a, and the issuer information section 1005 as a part of ticket data 1000 are stored to the ticket storing area 109g. The registered ticket data 1000 may not have the ticket punch information essential section 1003, or be held as it was at the issuing time, or be replaced with signature data of SE 101g for each registration update, or be replaced with Punch-order transmitted from the ticket punching machine 111g-1. In order to display the state of ticket data 1000 to the user, it is desirable that information of the ticket registration area 108g be provided. In this example, when the ticket punch essential information section 1002b is updated in the ticket registration area 108g after ticket punching, the ticket punch information essential section 1003b is also updated. Then, ticket punch information section 1006 (Punch_info) is newly added. There can be considered that a plurality of ticket punch information sections 1006 (Punch_info) are added at one ticket punching.

### (Working example 5)

The following will explain processing for moving the ticket between SEs using FIGS. 20 to 22. In addition to the movement of the entirety of one ticket (all valid values), this processing operation can perform such processing in which movement is performed n times of the rest of valid times in the case of, for example, a book of tickets.

FIG. 20 is a view illustrating a message example of SE of ticket movement processing between SEs. This can be largely divided into two, and one is registration of the ticket moved from the other SE, and the other is deletion (update) of the ticket moved to the other SE.

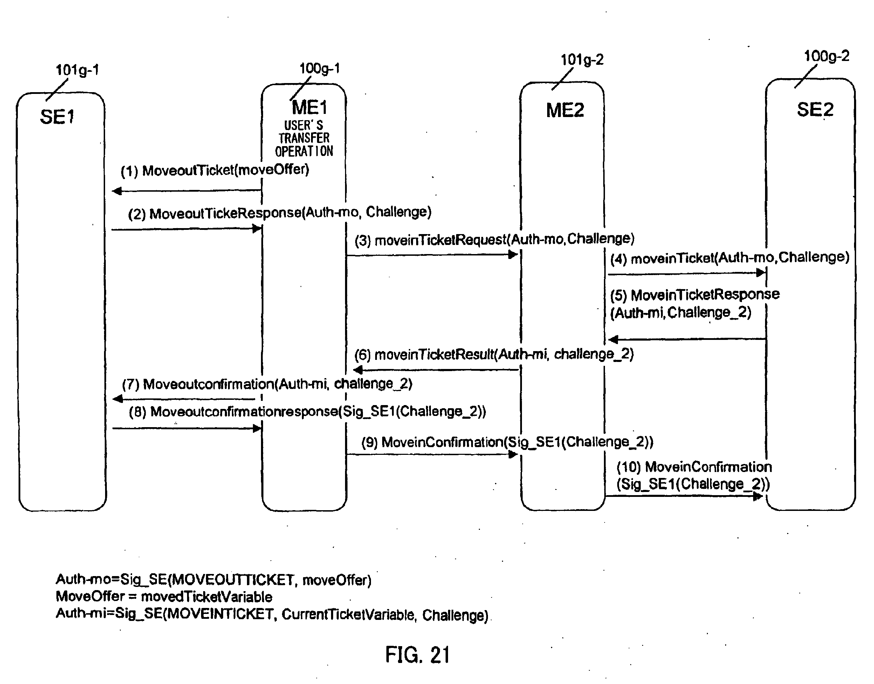

FIG. 21 is a view illustrating an example of a message in which the ticket moves between SEs. In FIG. 21, it is assumed that ME of a ticket registration source is ME1 (100g-1), and that ME of a ticket destination is ME2 (100g-2). Similarly, it is assumed that SE of a ticket registration source is SE1 (101g-1), and that SE of a ticket destination is SE2 (101g-2). Moreover, in FIG. 21, it is assumed that mutual authentication between SEs succeeds.

First of all, when the user designate's a ticket to be moved, and carries out a confirmation operation of movement processing, the ME1 (100g-1) generates a service item MoveOffer to be moved. Here, it is assumed that MoveOffer is ticket punch essential information (MovedTicketVariable) to be registered in the ticket registration area 108g of the ticket destination. In addition, there can be considered a method of designating a value of ticket punch essential information (TicketVariable) to be left. In MoveOffer, a ticket ID is included. When receiving MoveOffer in (1), SE1 moves a service item designated by MoveOffer from the ticket punch essential information (TicketVariable) registered in the ticket registration area 108g. When the value of MoveOffer is equal to the current ticket punch essential information (TicketVariable), this may be deleted from the ticket registration area 108g. SE1 places a signature (Sign_SE(MOVEOUTTICKET, MoveOffer)), to a flag showing a message indicative of MoveOffer and processing of movement of the random number Challenge as a message indicating that ticket punch essential information (TicketVariable) registered in the ticket registration area 108g according to MoveOffer, and transmits it to ME2 ((2), (3), and (4)). Sequentially, SE2 verifies a signature and registers it to the ticket registration area 108g of ES2 according to MoveOffer. Then, one in which a signature is placed to registered ticket essential information, Challenge, and a flag indicative of a message responding to movement processing (Sign_SE (MOVEINTICKET,current_TicketVariable, Challenge)), and the random number Challenge_2 are sent back to ES1 ((5), (6), and (7)). SE1 verifies the signature to verify the values of current_TicketVariable and Challenge, and when they are correct, a signature is placed to Challenge_2 and sent back to SE2((8), (9), and (10)).

SE1 cannot complete movement processing when there is no (7), and movement processing is cancelled and the processing flow is returned to the original. SE2 cannot complete movement processing when there is no (10), and movement processing is cancelled and the processing flow is returned to the original.

In this way, the SE 101 of the movement source transmits data, which proves that movement has already done after reducing value information to be moved from the registered value (for example, a signature is placed to the moved service item) to the movement destination, performs registration processing based on data that proves that SE of the movement destination has already moved, and sends data that proves registration (for example, a signature is placed to the registered contents) back to SE of the movement source, thereby SE of movement source can completes movement processing. Moreover, when receiving data that proves the completion of movement processing of SE of the movement source, SE of the movement destination also completes processing.

As a result, instead of that both SE1 and SE2 have the service item simultaneously, it is possible to move the service item between SEs.

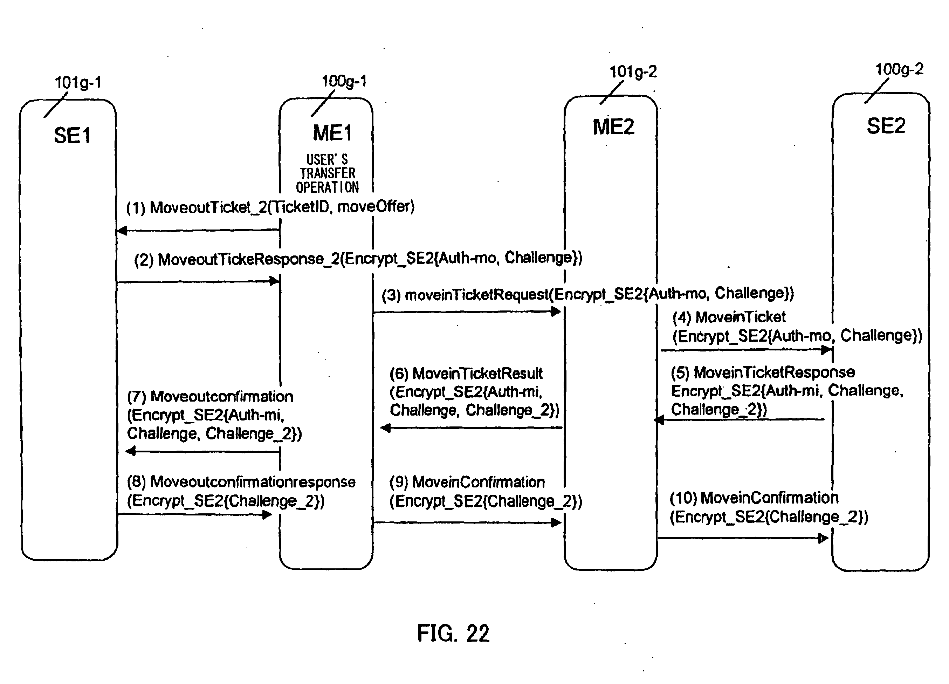

FIG. 22 illustrates a model view of transfer processing operation using a public key encryption system. In this processing operation, the contents of the message are substantially the same as FIG. 21, but the message is encrypted by the public key encryption to perform communications.

### <Embodiment 4>

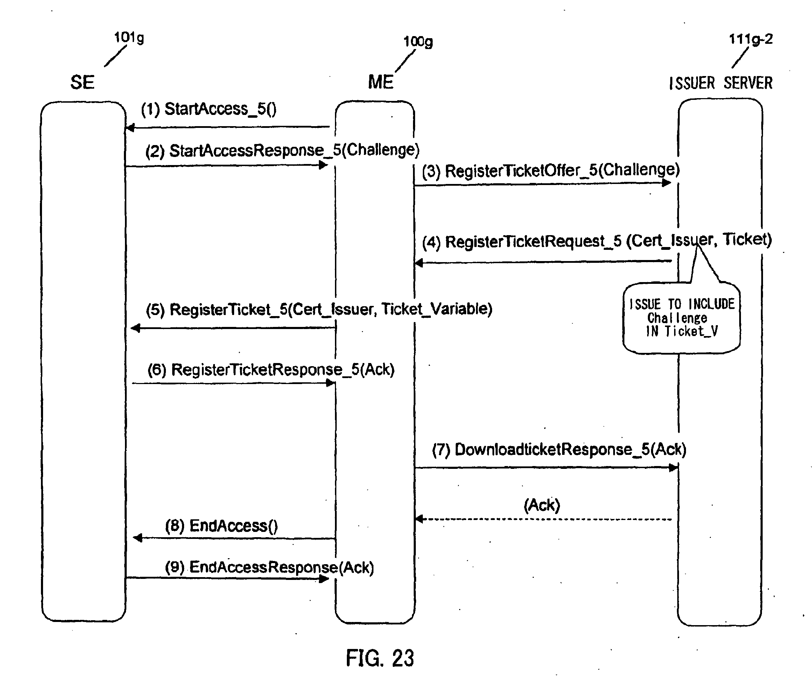

Embodiment 4 shows a working example of a combination of authentication processing and a message of processing peculiar to the ticket service using FIGS. 23 to 25. FIG. 23 is a view illustrating a message example of mix processing of server authentication and ticket download processing. This view illustrates an example of the message in which FIG. 6 and FIG. 13 are combined. In (4), (5), (6) of FIG. 23, (4), (5), (6) of FIG. 6 are combined with (1), (2), (3) of FIG. 13. Moreover, in (4) of FIG. 23, issue is made in such a way that Challenge is included in the ticket punch essential section 1001 of ticket data 1000, thereby making it possible for the SE 101g to conduct verification of the ticket sent from the destination that has received Challenge. Regarding the message in (5) of FIG. 23, ticket data 1000 may be sent or only the ticket punch essential section 1001 may be transmitted.

As a result, processing can be efficiently performed as maintaining security as compared with the case in which server authentication and ticket download processing are carried out separately.

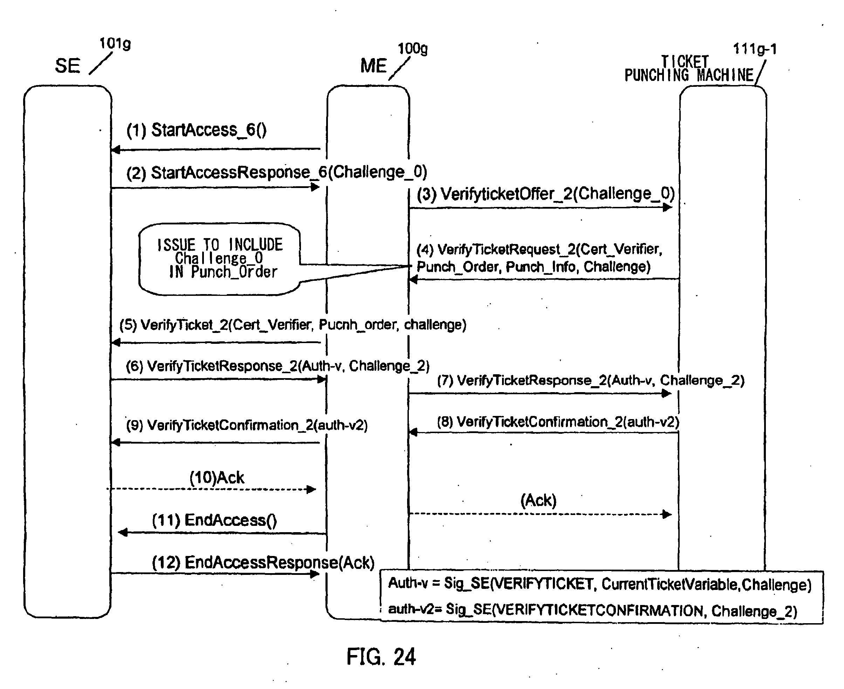

FIG. 24 is a view illustrating a message example of mix processing of server authentication and ticket punch processing. This view illustrates the message example in which FIG. 6 and FIG. 18 are combined. In (4), (5), (6) of FIG. 24, (4), (5), (6) of FIG. 6 are combined with (1), (2), (3) of FIG. 18. Moreover, in (4) of FIG. 24, issue is made in such a way that Challenge_0 is included in Punch_Order, thereby making it possible for the SE 101g to conduct verification of an update request sent from the destination that has received Challenge.

As a result, processing can be efficiently performed as maintaining security as compared with the case in which server authentication and ticket download processing are carried out separately.

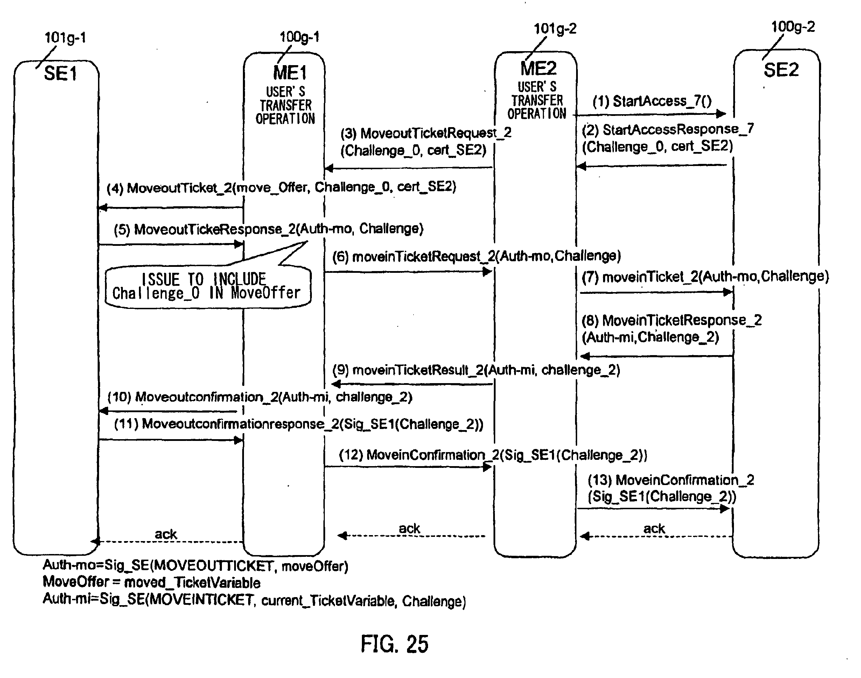

FIG. 25 is a view illustrating an example of a mix message of mutual authentication and ticket movement processing between SEs. This view illustrates a combination of FIG. 7 and FIG. 21, and (4) of FIG. 6 and (1) of FIG. 18 are combined from (4) of FIG. 7. In FIG. 25, the SE certificate 110 is transmitted in (2) but may be transmitted in (8).

This figure shows an example in which when the user of the movement destination operates movement start processing, authentication processing for movement processing is transmitted to ME1 of the movement source and the user of the movement source performs the movement processing start operation and processing thereby continues.

In (4) of FIG. 25, issue is made in such a way that Challenge_0 is included in Move_Offer, thereby making it possible for the SE 101g to conduct verification of a movement proof sent from SE that has received Challenge. As a result, processing can be efficiently performed as maintaining security as compared with the case in which server authentication and ticket movement processing are carried out separately.

As mentioned above, the message is exchanged using the signature and Challenge, so that reuse of message data is prevented at the same time with authentication, and approval or disapproval can be prevented by the message with a signature. As a result, it is possible to perform processing securely even with the smaller amount of messages.

### <Embodiment 5>

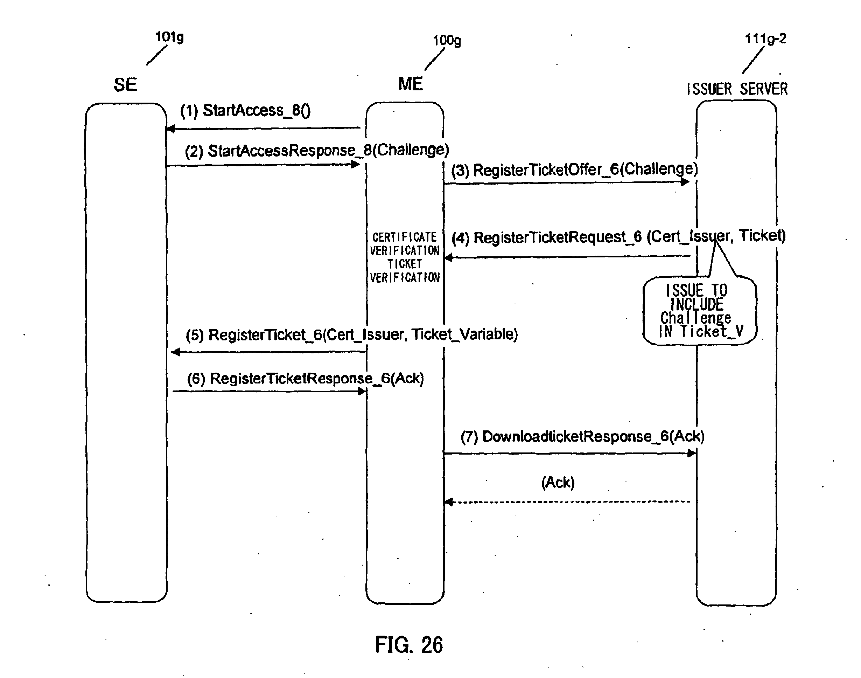

Embodiment 5 shows a working example using SE having a low processing capability by use of FIG. 26 to FIG. 28. FIGS. 26 to 28 correspond to the message examples of FIGS. 23 to 25, respectively.

SE having not so high processing capability must be used until SEs having high processing capability and at low cost come into widespread use. For this reason, the following shows a working example in which processing to be performed by SE is carried out by ME and only processing to be kept to a minimum is performed by SE. Even if SE having not so high processing capability and SE having high capability are mixed, it is desirable that an interface of the service server be shared.

This embodiment shows an example in which the verification of certificate and that of the signature are carried out by ME and the verification of Challenge and access to the ticket registration area are carried out by SE. FIG. 26 is a view illustrating an example of download processing corresponding to FIG. 23. In FIG. 26, the ME 100g performs the verification of issuer server certificate 112g-2 and that of the ticket.

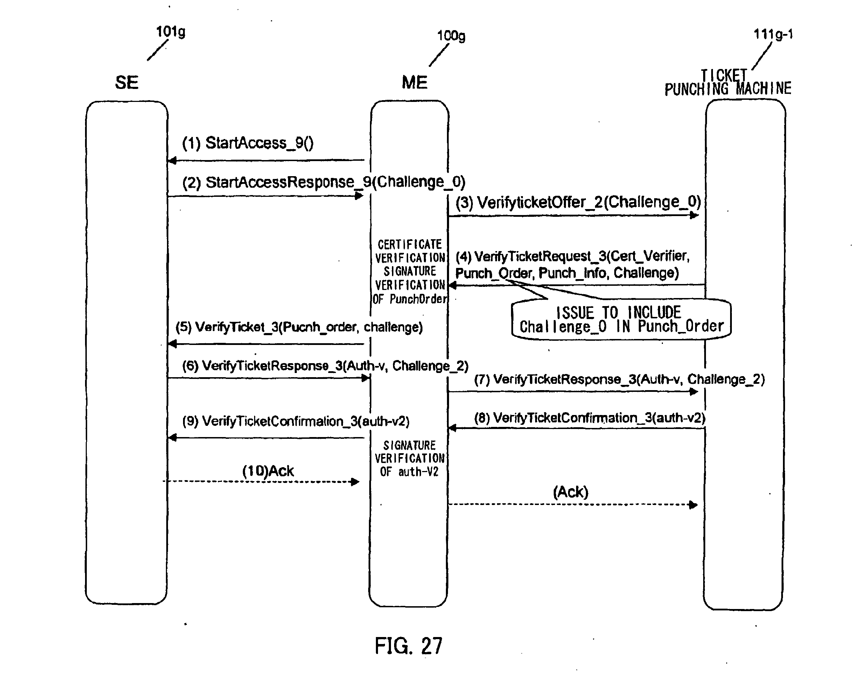

FIG. 27 is a view illustrating a message example of ticket punch processing corresponding to FIG. 24. In FIG. 27, the ME 100g performs the verification of ticket punching machine certificate 112g-1 and that of Punch_Order.

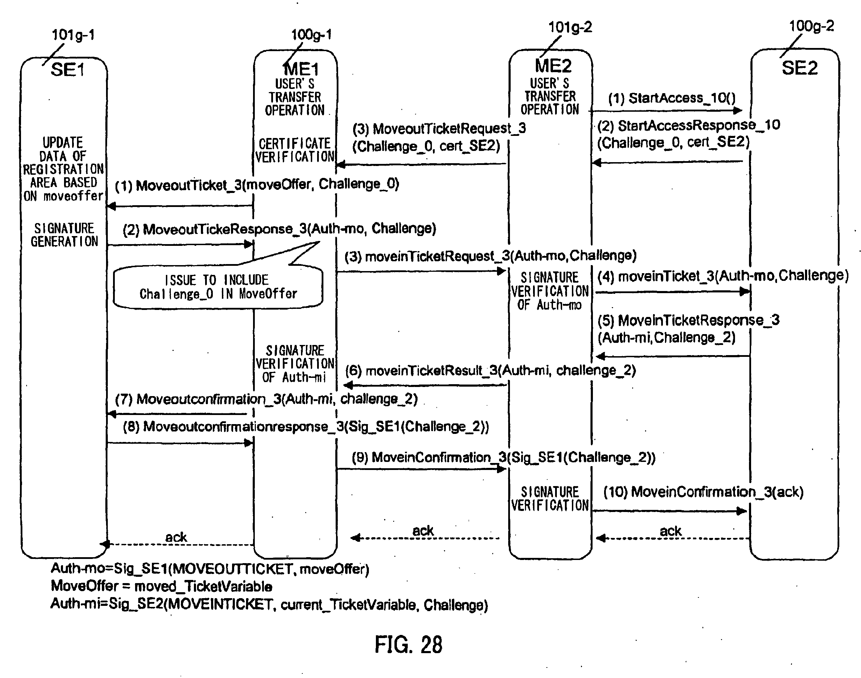

FIG. 28 is a view illustrating a message example of ticket movement processing between SEs corresponding to FIG. 25. Similarly, in FIG. 28, ME 100g of the transfer source and that of transfer destination perform the verification of the certificate and that of the message signature. As a result, processing of SE is executed by ME until SEs having high processing capability come into widespread use, and though SEs having various kinds of performance are mixed during the transition to the widespread use of SEs having high processing capability, it is possible to deal with performance without changing the interface on the service server side.

### <Embodiment 6>

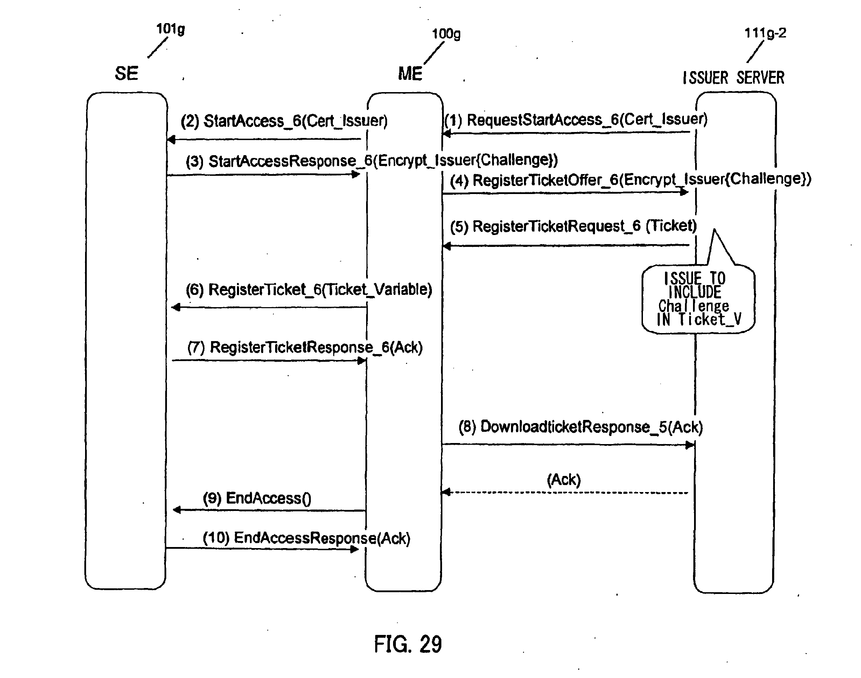

Embodiment 6 will explain ticket processing when there is no encryption of a transport layer of a communication path by use of FIGS. 29 to 31. In the case of no encryption of the communication path, there is a possibility that a furtive glance at the random number will be caused to make it possible to impersonate. For this reason, an explanation will be given of an example in which only the random number is transmitted using the pubic key encryption. In addition, the use of a common key can be considered.

An explanation will be given of ticket download processing using FIG. 29. First of all, the issuer server certificate 112g-2 is transmitted from the issuer server 111g-2 to the SE 101g ((1) and (2)). The SE 101g verifies the transmitted certificate and registers it to the communication partner storing area when it is a correct issuer server certificate. Moreover, the SE 101g generates a random number Challenge, encrypts it by the public key of the issuer server (Encrypt_Issuer{Challenge}) and send it back ((3) and (4)).

The issuer server 111g-2 decrypts Encrypt_Issuer {Challenge} and extracts Challenge. The issuer server 111g-2 causes Challenge to be included in the ticket punch essential information 1002, and places the signature of the issuer server thereto to generate ticket punch essential section 1003 (Ticket_V) of ticket. The issuer server 111g-2 transmits it together with the other portion of the ticket generated in advance as ticket data 1000 (Ticket) ((5) and (6)). ME may transmit Ticket to SE directly. It may transmit only ticket punch essential section 1003 of ticket data 1000.

SE verifies the signature of ticket punch essential section 1003 and registers the value of TicketVariable to the ticket registration area 108g when it is correct. When processing succeeds, a processing success acknowledgment is sent to the issuer server ((7) and (8)). (7) and (8) may use data with a signature. (7) and (8) may use data with a signature of SE that proves ticket punch essential information currently registered.

In this way, only the random number is encrypted at a transmitting time, ticket download can be securely performed even if the entirety of the message is not encrypted.

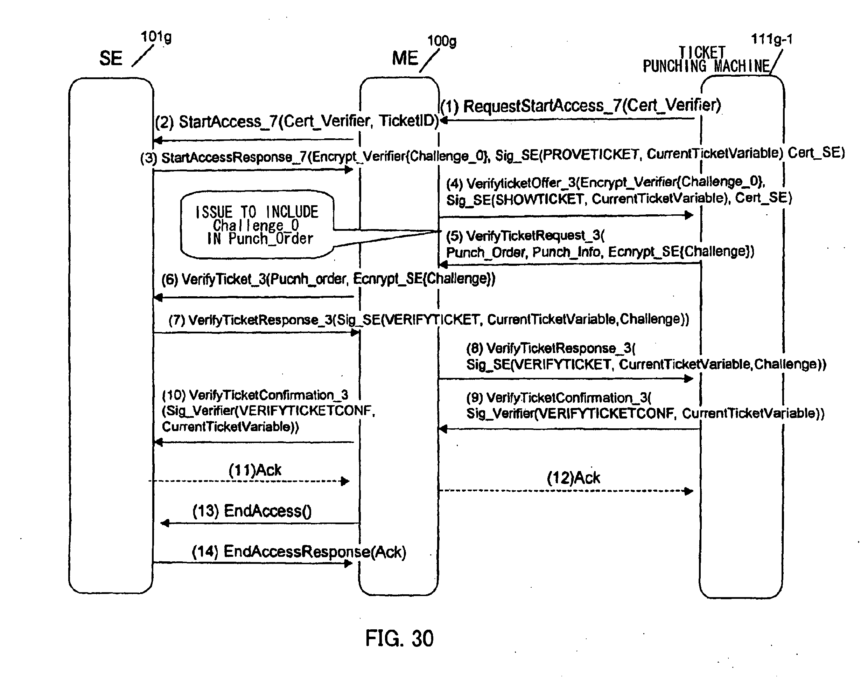

An explanation will be given of ticket punch processing by use of FIG. 30. First of all, the ticket punching machine 111g-1 transmits the ticket punching machine certificate 112g-1 to SE 101g (1). ME transmits the ticket ID of the ticket to be punched and the ticket punching machine certificate 112g-1 (2). The ticket ID may be transmitted from the ticket punching machine 111g-1 and be added by the user's operation at ME.

SE 101g verifies the transmitted certificate and registers it to the communication partner storing area when'it is the correct ticket punching machine certificate. Moreover, SE 101g generates random number Challenge_0, and encrypts it by the pubic key of the ticket punching machine (Encrypt_Verifier{Challenge_0}. SE places a signature to ticket information (CurrentTicketVariable) registered to the ticket registration area corresponding to a designated ticket ID and data including a flag indicative of a message that presents a ticket designated by CurrentTicketvariable to the issuer server (Sign_SE(SHOWTICKET,CurrentTicketVariable)).

Moreover, Encrypt_Verifier{Challenge_0}, Sign_SE(SHOWTICKET,CurrentTicketVariable) are sent back together with the SE certificate ((3) and (4)). Here, the SE certificate may be a SE public key.

The ticket punching machine 111g-1 decrypts Encrypt_Verifier(Challenge_0) to extract Challenge_0. Furthermore, the ticket punching machine 111g-1 verifies of the signature of Sign_SE(SHOWTICKET, CurrentTicketVariable) and determines whether it is a usable ticket. When it is a usable ticket, the ticket punching machine 111g-1 generates Punch_Order. Punch_Order is one that is obtained by placing the signature of the ticket punching machine to PunchOrder, but in this embodiment, this means one in which the signature of the ticket punching machine is placed to data including Challenge_0 in addition to the ticket ID and information such as a valid period and a value of the rest of times after ticket punching. Here, PunchOrder designates ticket punch essential information of the ticket after ticket punching. Pnch_Info is generated after ticket punching or when necessary. Punch_Info may not be provided. A plurality of Punch_Info may be provided. Moreover, Challenge is generated and encrypted by the public key of SE (Encrypt_SE(Challenge)). These data generated by the ticket punching machine, that is, Punch_Order, Punch-Info, and Encrypt_SE (Challenge) are transmitted to SE ((5) and (6)).

SE 101 decrypts Encrypt_SE(Challenge) and extracts Challenge. Moreover, SE 101 verifies the signature of Punch_Order. SE 101 further verifies Challenge_0 included in PunchOrder and Challenge_0 transmitted in (3), and performs change processing when it is correct. SE 101 rewrites data of the ticket Id of the ticket registration area 108g designated by PunchOrder to data designated by PunchOrder. SE 101 places a signature to SE 101g to ticket punch essential information (CurrentTicket Variable) updated by the ticket registration area 108g, Challenge, and a flag indicative of data that proves data update of the ticket registration area 108g, and sends it back to the ticket punching machine 111g-1 ((7) and (8)).

The ticket punching machine 111g-1 compares Challenge with the value sent in (5), and compares CurrentTicketVariable with PunchOrder sent in (5) when it is correct. This message may be stored as proof. When it is correct, the ticket punching machine 111g-1 places the signature of the ticket punching machine 111g-1 to CurrentTicketVariable as proof showing a change to the value of Current TicketVariable has been confirmed, and data including the message indicative of proof in which change has been confirmed (Sign_SE(VERIFYTICKET CONF, CurrentTicketVariable) and sends it back ((9) and (10)).

SE 101g verifies the signature of Sign_SE (VERIFYTICKETCONF,CurrentTicketVariable), compares CurrentTicketVariable with the value sent in (7), and completes change processing when it is correct. This message may be stored as proof of change confirmation.

After that, the ticket punching machine 111g-1 may provide service to the user after receiving a processing success acknowledgement, (11) and(12) may not be provided.

In this way, only by encrypting the random number at the time of transmission, the ticket punch processing can be securely performed without encrypting the entirety of the message.

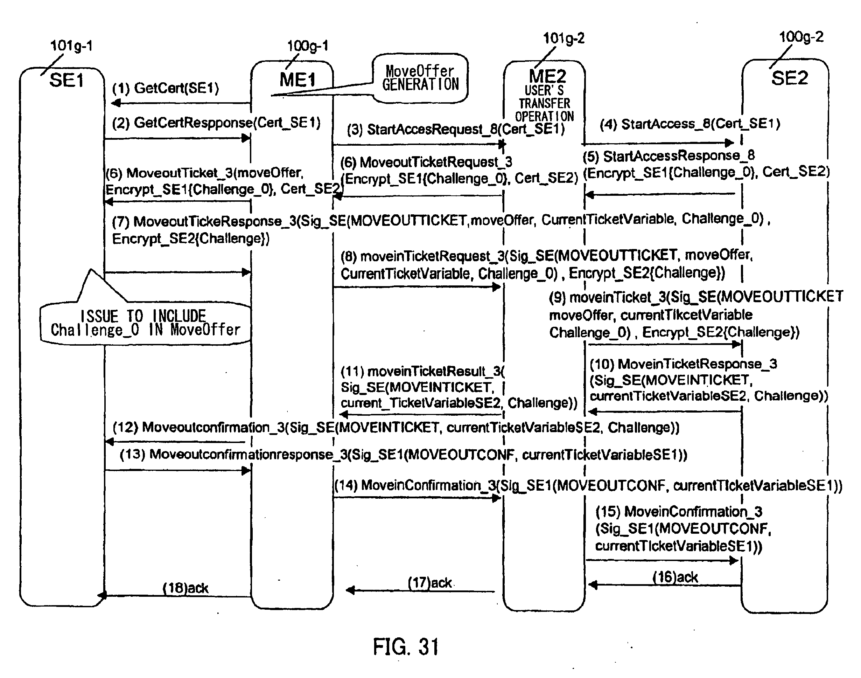

An explanation will be given of ticket movement processing by use of FIG. 31. In this ticket movement processing, ME1 of the moving source generates MoveOffer, which is information showing which ticket value is used and how far movement is made. The user may input and decide it or designate it from the communication partner. MoveOffer becomes ticket ID and ticket punch essential information including the valid period and the number of times of the ticket at the moving destination. MoveOffer may be created before the message in (4) is transmitted.

First of all, the ME1 of the moving source obtains SEI certificate from SE1 of the moving source ((1) and (2)) and transmits it to SE2 of the moving destination ((3) and (4)).

SE2 of the moving destination verifies SE1 certificate and registers it to the communication partner storing area when it is correct. Moreover, SE2 generates the random number Challenge_0, encrypts it by the public key of SE1 (Encrypt_SE1 (Challenge_0)) and sends it back with SE2 certificate ((5) and (6)). ME1 of the moving source transmits MoveOffer to SE1 in addition to Encrypt_ SE1(Challenge_0), SE2 certificate (7).

SE1 verifies SE2 certificate and registers it to the communication partner storing area when it is correct. Moreover, SE1 decrypts Encrypt_SE1 (Challenge_0).

Moreover, verification may be performed by comparing data of ticket ID designated by MoveOffer with data registered in the ticket registration area. For example, it is possible to verify whether MoveOffer has longer valid period may be performed. Moreover, it is possible to verify whether v MoveOffer has larger number of valid times. SE1 places a signature of SE1 to MoveOffer, data of the current ticket area (CurrentTicketVariable), Challenge_0, and data including a flag showing data that proves the value of designated ticket may be moved (Sign_SE(MOVEOUTTICKET, MoveOffer, Current TicketVariable, challenge_0)).

Furthermore, SE1 generates a random number Challenge. SE 1 may store Challenge as data corresponding to the updated ticket ID of the ticket registration area 108g. SE1 encrypts Challenge by the public key of SE2 Encrypt_SE2(Challenge).

SE1 transmits Sign_SE(MOVEOUTTICKET, MoveOffer, CurrentTicketVariable, Challenge_0) and Encrypt_SE2(Challenge) to SE2 ((8), (9), and (10)). SE2 decrypts Encrypt_SE2(Challenge). SE2 verifies the signature of Sign_SE(MOVEOUTTICKET, MoveOffer, Challenge_0). SE2 verifies Challenge_0 and the value sent in (5), and registers information of MoveOffer to the ticket registration area 108b when it is correct. SE2 places a signature of SE2 to ticket punch essential information (CurrentTicketVariableSE2) registered to the ticket registration area 108g of SE2, a flag showing a message proving that registration has been made as designated by CurrentTicketVariableSE2, data including Challenge (Sign_SE2(MOVEINTICKET, CurrentTicketVariableSE2, Challenge))and transmit it to SE1 ((11), (12) and (13)).

SE1 verifies the signature of Sign_SE2 (MOVEINTICKET, CurrentTicketVariableSE2, Challenge). SE1 compares Challenge with the value sent in (7). SE1 verifies CurrentTicketVariable SE2 and MoveOffer sent in (7) when it is correct. When it is correct, the designated number of times is reduced if there is the number of times in MoveOffer, thereby changing data of the ticket registration area to have a value corresponding to one that is moved by the value of MoveOffer.

SE1 places the signature to current ticket punch essential information (CurrentTicket VariableSE1) and data including a flag showing a message proving that movement processing has completed such that moved data is CurrentTicketVaraibleSE1 (Sign_SE1(MOVEOUTCONF, Current TicketVariableSE1)), and transmits it to SE2 ((13), (14), and (15)).

SE2 verifies the signature of Sign_SE1 (MOVEOUTCONF, Current TicketVariableSE1). SE2 performs comparison among CurrentTicketVariableSE1, MoveOffer received in (10), and the value of CurrentTicketVariable to verify. When it is correct, SE2 transmits a processing success acknowledgement (ACK) ((16), (17), and (18)) and competes movement processing. When this processing does not succeed, movement processing is cancelled, and the ticket registered by movement processing is cancelled. The processing success acknowledgement may data with a signature of SE2.

When receiving the processing success acknowledgement (ACK), SE1 completes movement processing. When the processing success acknowledgement is not received, movement processing is cancelled.

In this embodiment, regarding SE1, actual movement processing is not carried out before message transmission in (8), and movement processing is executed before message transmission in (14). However, it can be considered that actual movement processing is carried out before message transmission in (8) by adding the processing flow shown in the working example of Embodiment 3.

In this way, only by encrypting the random number at the time of transmission, the ticket movement processing can be securely performed without encrypting the entirety of the message. Moreover, even when there is no encryption of a transport layer of a communication path, secure service processing can be performed without using large encryption capacity.

### <Embodiment 7>

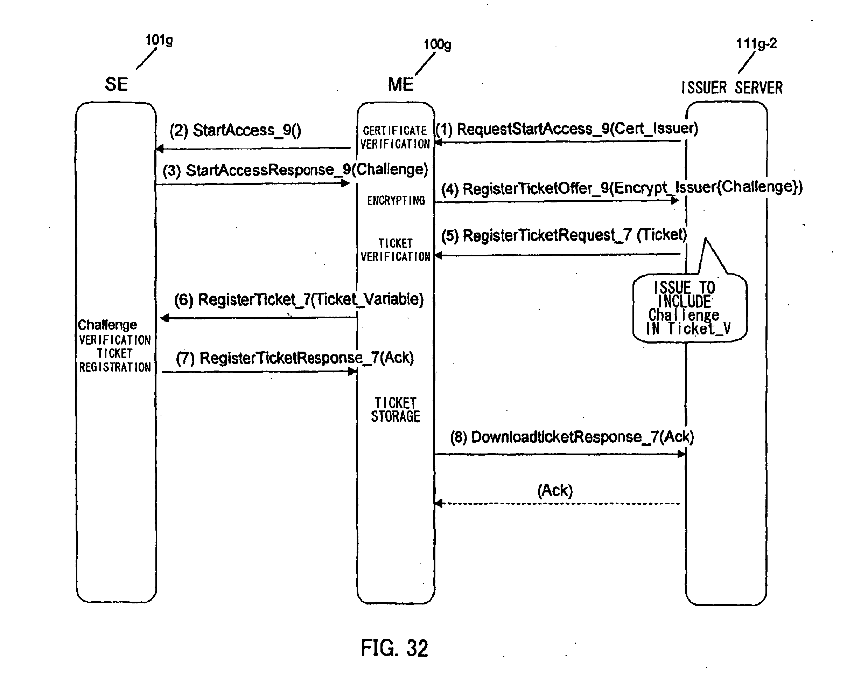

Embodiment 7 will explain ticket processing using SE with no high processing capability when there is no encryption of a transport layer of a communication path by use of FIGS. 32 to 34. In Embodiment 7, ME performs processing such as verification of certificate, encryption of the random number, decryption, verification of signature that are performed by SE in Embodiment 6.

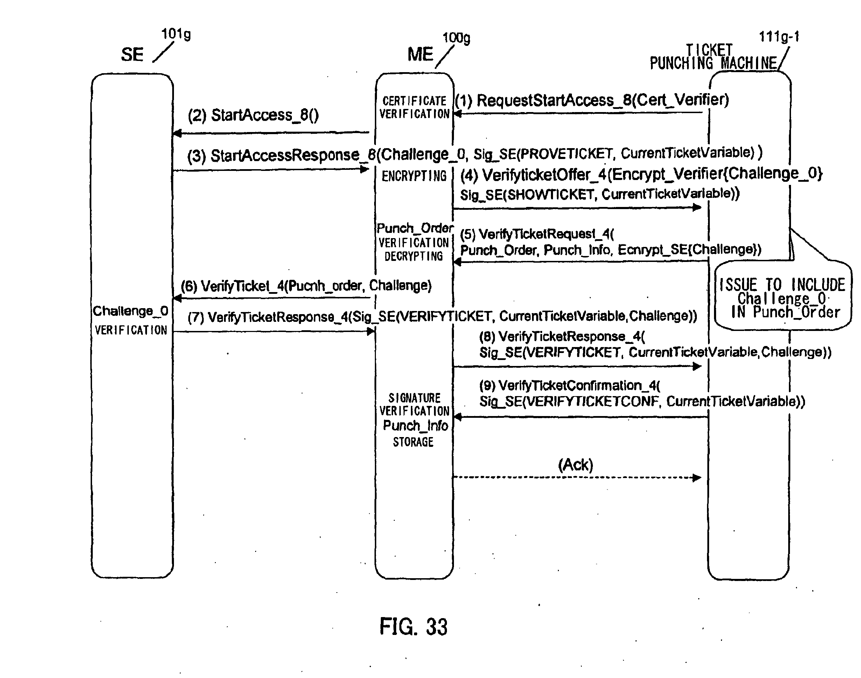

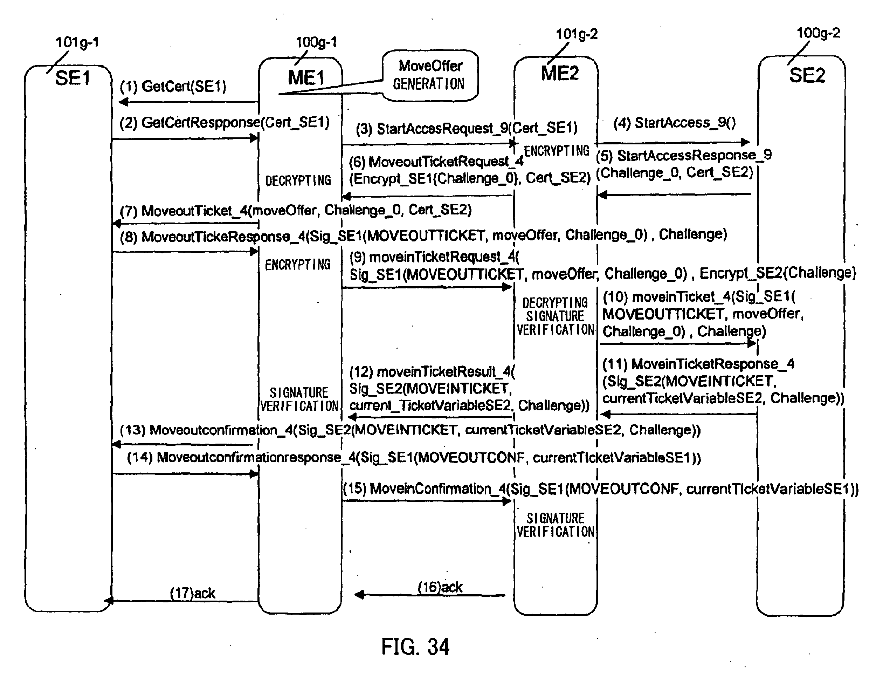

FIG. 32 is a view illustrating an example of download processing corresponding to FIG. 29 of Embodiment 6. FIG. 33 is a view illustrating an example of ticket punch processing corresponding to FIG. 30. FIG. 34 is a view illustrating an example of ticket movement processing between SEs corresponding to FIG. 31.

In Embodiment 7, though SE performs generation of the random number, verification of the random number, registration of the ticket, and generation of the signature, it can be considered that SE performs only registration of the ticket and generation of the signature in order to simplify processing.

In this way, even when there is no encryption of the transport layer of the communication path, processing sharing with ME is adjusted according to the performance of SE, making it possible to continue service without changing the system on the server side even during the transition to the world at which Embodiment 7 aims.

### <Embodiment 8>

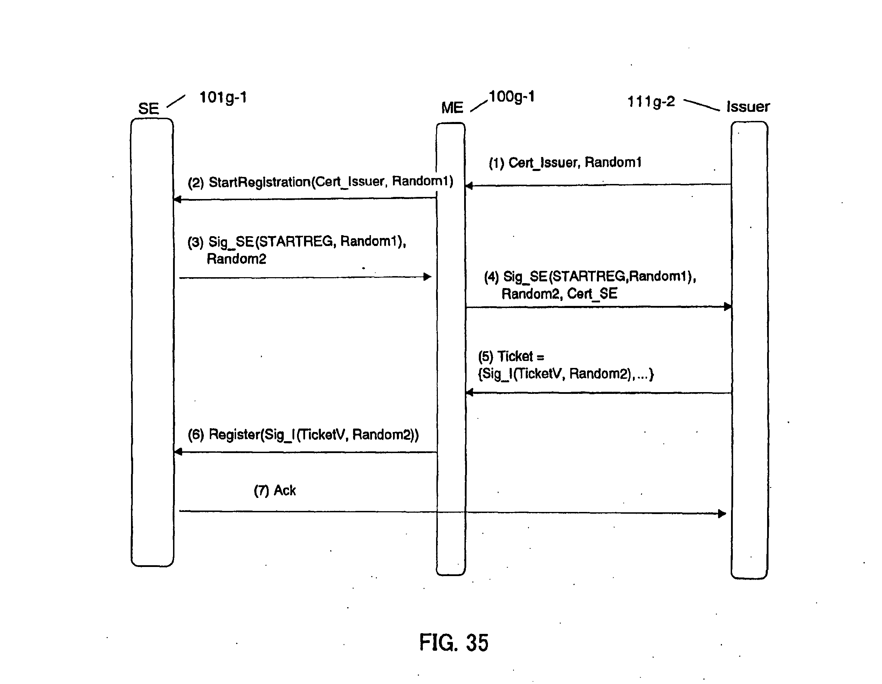

Embodiment 8 shows a working example including mutual authentication processing used using certificate by use of FIGS. 35 to 39. FIGS. 35, 36, 37 and 38, and 39 correspond to message examples of FIG. 23, FIG. 17, FIG. 24, and FIG. 25, respectively. Though their descriptions are partially changed, each issuer corresponds to the issuer server 111g-2 of FIG. 23. Random corresponds to Challenge of FIG. 23. TicketV corresponds to ticket punch essential information 1002, and shows information essential for ticket punch processing such as ticket ID, degree of validity, valid period, and the like.

Moreover, TicketID includes some kinds such as a ticket system ID showing the kind of a ticket application that performs this ticket processing, a ticket type ID such as an event ticket, a book of tickets, etc., a ticket kind ID showing a specific event, serial numbers uniquely put on tickets one by one and the like, and this can be designated by these combinations. This makes it possible to efficiently specify a ticket to be confirmed according to locations and circumstances.

FIG. 35 shows an example of download processing corresponding to FIG. 23. In FIG. 35, the server performs processing authenticating SE in the messages (1) to (3) in addition to FIG. 23. This makes it possible to perform ticket registration processing to the correct SE.

In FIG. 35, there are the following two primitives to SE. By defining the primitive of download processing, compatibility between ME and SE can be secured.

### (Primitive 1 of download processing)

Primitive name ... StartRegistration
Input: Message of (2) ... Cert_Issuer, Random1
Output: Message of (3) ... Sign_SE(STARTREG, Random1), Random 2

Processing ... input issuer server certificate 112g-2 (Cert_I) is verified. When it is correct, data (Sign_I(STARTREG,RANDOM1)) in which a signature is placed to the random number input as a signature obj ect and a newly generated random number (Random2) are turned. The public key of certificate and the random number value (random2) are stored.

### (Primitive 2 of download processing)

Primitive name ... Registration
Input: Message of (6) ... Sign_I(TicketV, Random2)
Output: Message of (7) ... ACK
Processing: Random2 is checked against the random number (Random2) generated by StartRegistration, and when it is correct, a signature of input data is verified by the pubic key obtained by StartRegistration. When it is correct, TicketV is stored. When processing ends normally, ACK is returned.

In (3), there is included Random2, which is to be included in the ticket issued similar to FIG. 23. Since Random2 generated by SE101g-1 is signed and generated to be included in ticket punch essential information 1002 of ticket to be issued, it is possible to prevent replacement of ticket data 1000 in communication. The reason is as follows. Namely, in addition to the fact that the overlap of Challenge value can be neglected in terms of probability, when Challenge is different, the signature is also different and a person, who does not know the secret key of issuer server, cannot create the signature, so that the same signature cannot be obtained and replacement with a value copied somewhere cannot be performed. This results in secure processing even if only ticket data 1000 is wiretapped, only SE 101g-1, which has generated Random2 included therein, can register the ticket.

Moreover, an object of signature (here, authentication processing for starting ticket registration) is also included in the random number with a signature of (3), a malicious user cannot reuse this message for the other object.

In connection with ME 100g-1, verification of the ticket punch essential section 1001 is left to SE at a receiving time in (5), but the other verification, for example, verification of the ticket static section 1004 is carried out by ME. In this way, processing is dispersed to minimize processing by SE, making it possible to perform fast processing. Even if signature verification of the ticket static section 1004 is faked, this is no more than harassment without actual harm, so that there is a case in which no signature is placed to the ticket static section. This makes it possible to shorten the ticket data length and omit signature verification processing of the ticket static section 1004.

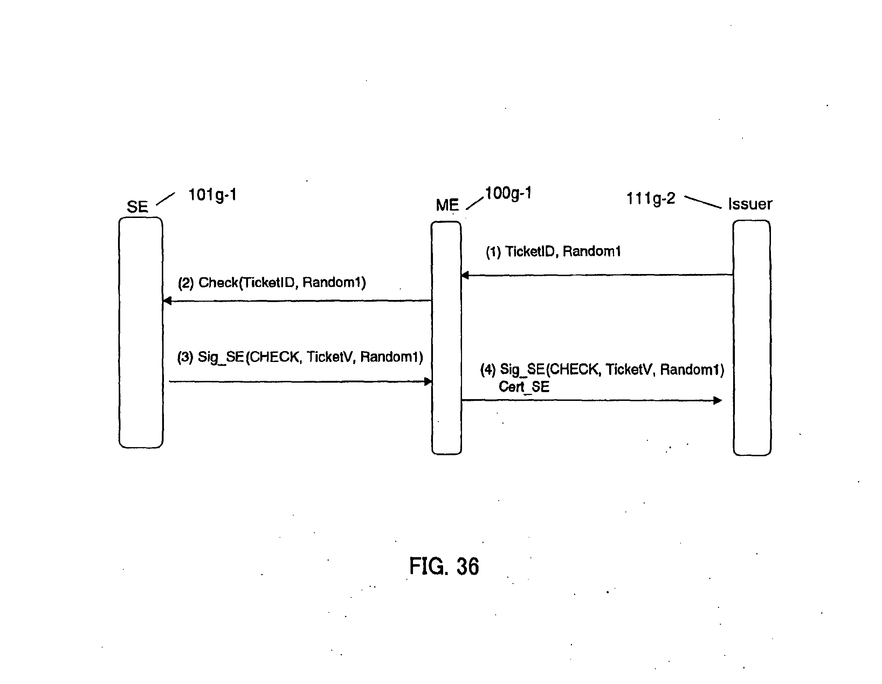

FIG. 36 shows an example of ticket proof processing corresponding to FIG. 17. Though the name of message is different, processing is exactly the same.

In FIG. 35, there is one primitive to the SE as described below.

By defining the primitive of proof processing, compatibility between ME and SE can be secured.

### (Primitive of proof processing)

Primitive name ... Check
Input: Message of (2) ... TicketID, Random1
Output: Message of (3) ... Sign_SE(CHECK, TicketV, Random1),

Processing ... It is searched whether TicketV, which includes the value of the input TicketID, is stored. When it is stored, a signature is generated in a value, which includes an object of the signature, the TicketV and input Random1, is generated, and returned as a return value.

This flow can be used in ticket punch processing such as season ticket, ID card and the like where ticket data is unchanged by ticket punch processing. When this is used in ticket punch processing, the issuer of FIG. 36 is changed to the ticket punching machine (Verifier) 111g-1.

Moreover, limit time may be provided to communication time between SE 101g-1 and ticket punching machine 111g-1. This can prevent the following illegality:
(1) An illegal terminal obtains Challenge and TicketID from the ticket punching machine as a normal procedure.
(2) Input the above Challenge and TicketID to a normal terminal (by cheating SE as if they came from the ticket punching machine) to generate a signature relating to Challenge and the value section.
(3) The illegal terminal receives the signature created by the normal terminal, and transmits it to the ticket punching machine to pass through the ticket punching.

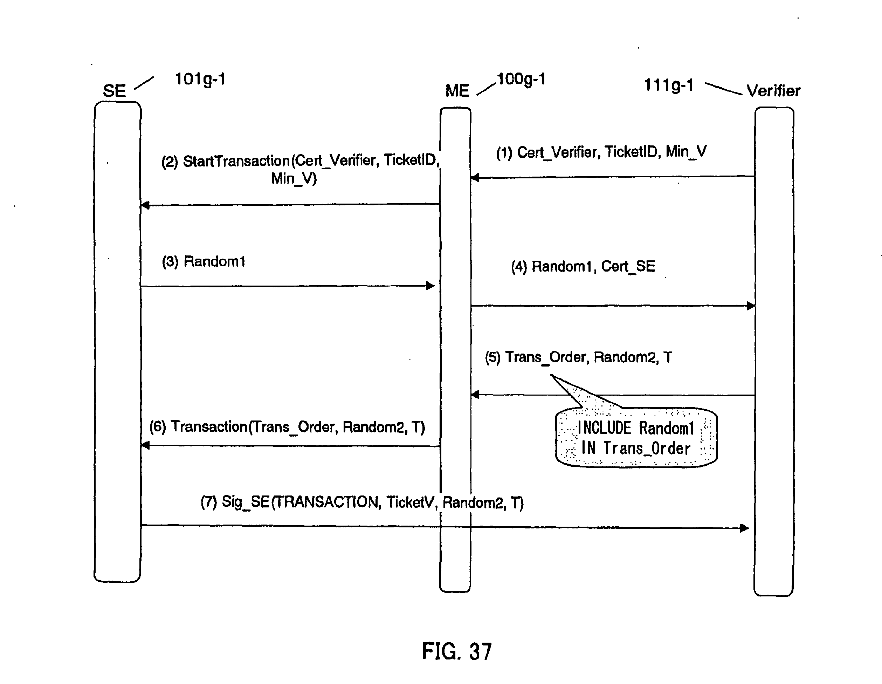

FIG. 37 shows an example of ticket punching processing corresponding to FIG. 24. The ticket punching processing includes service in which no value is reduced at the ticket punching time, for example, the season ticket, the membership card as explained in FIG. 36 and service in which ticket punching processing ends at one time, for example, the book of tickets, a prepaid card, and service in which processing for entry and exist is needed, for example, an prepaid card for a train. In this way, the primitive is divided for each service, thereby making it possible to optimize processing and to perform processing at high speed.

FIG. 37 shows only the service in which ticket punching processing ends at one time, for example, the book of tickets, the prepaid card, and the service in which processing for entry is needed, for example, the prepaid card for a train.

In FIG. 37, there are two primitives to the SE. as described below. By defining the primitive of ticket punch processing, compatibility between ME and SE can be secured.

### (Primitive 1 of ticket punch processing)

Primitive name ... StartTransaction
Input: Message of (2) ... Cert_Verifier, TicketID, Min_V
Output: Message of (3) ...Random1,

Processing ... The input verifier ticket punch certificate Cert_Verifier 112g-1 is verified. When it is correct, it is searched whether TicketV, which includes the value of the designated TicketID, is stored. When Min_V is input as a valid degree, it is verified whether the valid degree of the searched TicketV is more than Min_V. When it is correct, a newly generated random number is retuned. The public key of certificate and the value (Random1) of the generated random number are stored. TicketID and Min_V may be used as optional functions.

### (Primitive 2 of ticket punch processing)

Primitive name ... Transaction
Input: Message of (6) ... Trans_Order, Random2, T
Output: Message of (7) ...Sign_SE(TRANSACTION, TicketV, Random2, T)
Processing: Comparison between Random1 generated by StartTransaction or PreSEntation and the value of the random number included in Trans_Order is performed to verify. When it is correct, a signature of data (Trans_Order) with a signature of input is verified by the public key obtained by StartTransaction or PreSEntation. When it is correct, the value of TicketV designated by Trans_Order is reduced by the designated value, and when there is GateInfo, rewriting is performed. Data in which an electronic signature is generated in data (TRANSACTION, TicketV, Random2, T), which includes the object of the signature, the value of updated TicketV, input Random2, and T, is returned.

In FIG. 37, since TicketID is sent from the ticket punching machine (Verifier) 111g-1 in the message of (1) in addition to processing of FIG.24, ticket punch processing is all performed automatically even if the user does not select the ticket in advance. Moreover, since Min_V (minimum invalid degree and the like) is sent in the message of (1), judgment on, for example, a case of an insufficient degree can be performed speedily before actual ticket punch processing (Transaction).

Moreover, in (5), time information of the ticket punching machine (Verifier) 111g-1 is sent and such data is included in data of (6), making it possible to refer to time information in determining trouble processing generated in operation, so that judgment can be easily performed.

Trans_Order included in the message of (6) is data in which the verifier places a signature to the value including TicketID and Random1 generated by reduction values (how many times valid time is reduced, how much degree valid degree is reduce and the like) StartTransaction. In some cases, this is included in data to be signed when other information (GateInfo: entry and exist information) is required.

The present embodiment has shown processing in which reduction is performed every ticket punch processing, however, there is a method in which a value showing the limitation number of time and the limitation degree and a value showing a cumulative value are prepared separately to increase a cumulative value every processing. In this way, the initial value and the cumulative value are separately provided, so that the initial value and the cumulative value can be confirmed anytime.

Moreover, since the random number sent from the partner is included in each of the messages of (5) and (7), replacement attach on the communication path is prevented and secure communication can be obtained.

ME 100g-1 stores Trans_Order included in the message of (5) and Sign_SE(TRANSACTION, TicketV, Random2, T) included in the message of (7). Accordingly, by showing these messages, it is possible to prove which ticket punching machine is used and what ticket punch processing is performed even when the ticket punching machine breaks down.

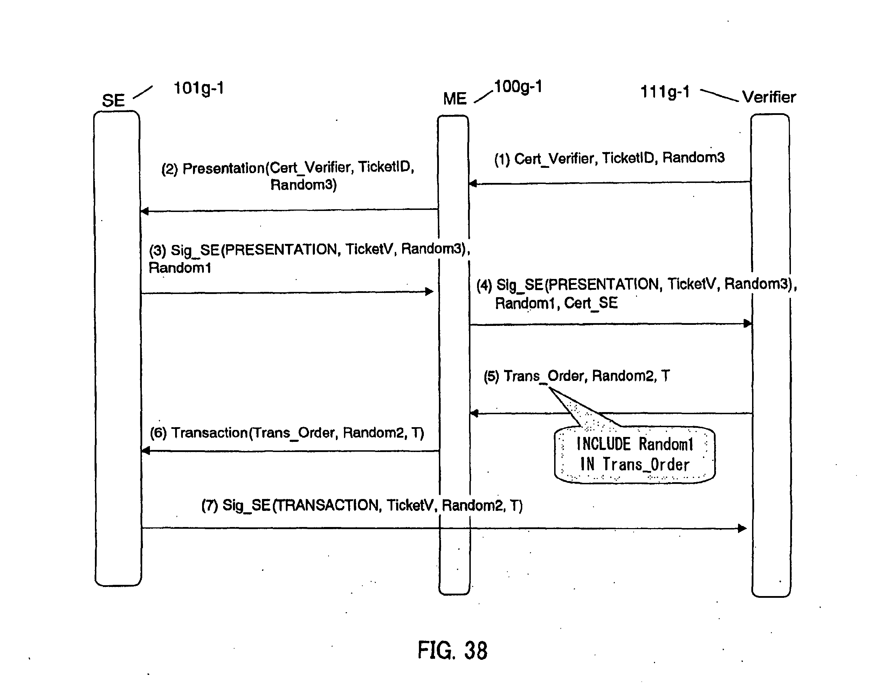

FIG. 38 also illustrates ticket punch processing corresponding to FIG. 24, but only exist processing of the service such as the prepaid card for a train is shown in FIG. 38.

Unlike processing illustrated in FIG. 37, since PreSEntation primitive is added, information of the entry time is presented to the ticket punching machine 111g-1 and the ticket punching machine 111g-1 performs calculation on a settlement of account based on the presented entry information to make it possible to generate Trans_Order.

In FIG. 37, there are two primitives to the SE. The first primitive is shown below. By defining the primitive of ticket punch processing, compatibility between ME and SE can be secured.

### (Primitive 1 of ticket punch processing)

Primitive name ... PreSEntation
Input: Message of (2) ... Cert_Verifer, TicketID, Random
Output: Message of (3) ... Sign_SE (PRESENTATION, TicketV, Random3), Random1

Processing ... The input ticket punching machine certificate Cert_Verifier 112g-1 is verified. When it is correct, it is searched whether TicketV, which includes the value of the input TicketID, is stored. When it is stored, data in which a signature is placed to the value (PRESENTATION, TicketV, Random3) including the object of signature, the designated TicketV and Random3 and a newly generated random number (Random1) are returned. The public key of certificate and the value (Random1) of the generated random number are stored.

The second primitive is Transaction primitive explained in FIG. 37. In FIGS. 37 and 38, the messages of (5) to (7) are exactly the same. Since two services can be installed with the same primitive, efficiency is improved. For example, even in SE 101g-1 that has supported only the service of book of tickets so far, if only PreSEntation primitive is installed, it is possible to implement the service that needs calculation processing with reference to information of entry time at the time of exist as in the prepaid card for a train.

Moreover, since the random number sent from the partner is included in each of the messages of (4), (5) and (7), replacement attach on the communication path is prevented and secure communication can be obtained.

ME 100g-1 stores Trans Order included in the message of (5) and Sign_SE(TRANSACTION, TicketV, Random2, T) included in the message of (7). Accordingly, by showing these messages, it is possible to prove which ticket punching machine is used and what ticket punch processing is performed even when the ticket punching machine breaks down. In addition, a parameter, which designates the number of persons, may be added to the message (4) . This makes it possible for the verifier to generate Trans_Order according to detailed requests such as a plurality of person, one adult and one child even when the verifier does not have a function of automatically detecting the number of persons.

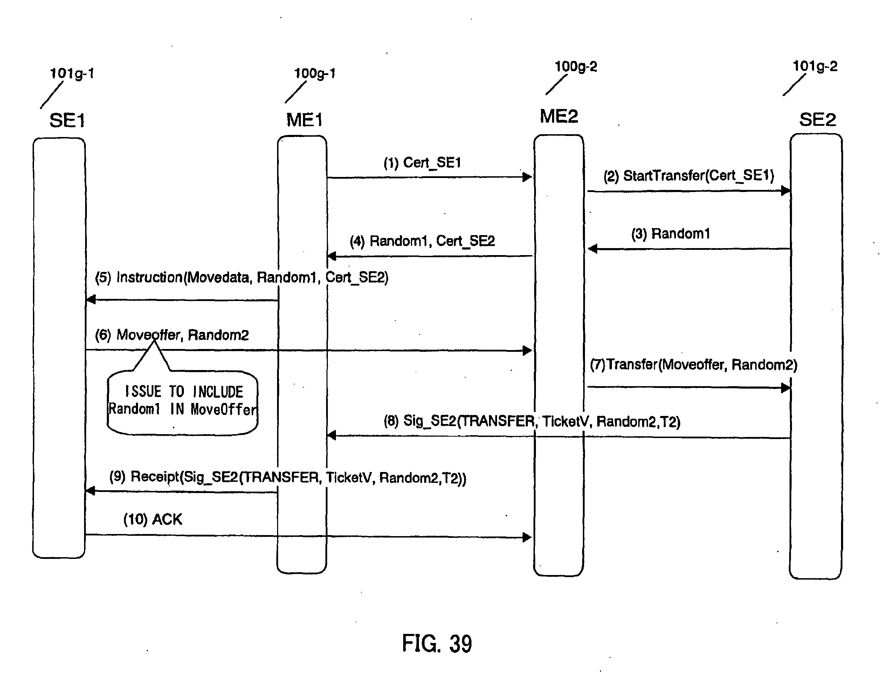

FIG. 39 illustrates an example of ticket movement processing between SEs corresponding to FIG. 25. Unlike FIG. 25, a message view including transmission of the certificate of SE1 is shown in FIG. 39. Moreover, this is optimized and the confirmation message is omitted.

In FIG. 39, four primitives are provided as described below. Two are provided to the sending side and other two are provided to the receiving side. By defining the primitive of movement processing, compatibility between ME and SE can be secured.

### (Primitive 1 of movement processing)

Primitive name ... StartTransfer
Input: Message of (2) ... Cert_SE1
Output: Message of (3) ...Random1

Processing ... processing of SE2 of the ticket receiver side. Certificate Cert_SE1 of input SE1 (SE of sender side) 101g-1 is verified. When it is correct, a newly generated random number (Random1) is returned. The public key of certificate and the value (Random1) of the generated random number are stored.

Movedata shown in (5) of the message indicates the value of TicketV, which is moved and registered to the partner's SE. It is assumed that this data is generated by the user's operation using the application of ME 100g-1. When the use of this ticket is not limited to one time, such a designation to move a part of the ticket may be possible. Moreover, the ticket, which does not permit movement at all, and the ticket, which does not permit movement of only the part, may be possible, depending on the ticket. In this case, information showing this is included in the ticket punch essential information 1002. This makes it possible for the service provider to provide service having flexibility.

### (Primitive 2 of movement processing)

Primitive name ... Instruction
Input: Message of (5) ...Movedata, Random1, Cert_SE2
Output: Message of (6) ... MoveOffer, Random2

Processing ... processing of SE2 of the ticket sender side. Certificate Cert_SE2 of input SE2 (SE of receiver side) 101g-2 is verified. When it is correct, it is confirmed whether TicketV shown by input Movedata is stored. When it is stored, an amount designated by Movedata is subtracted from TicketV to update TicketV. When processing ends normally, data MoveOffer=Sign_SE1(Movedata, TicketV, Random1, T1) where a signature is placed to the value of TicketV before updating, Movedata, and data having a combination of Random1 and time information managed by SE1 and a newly generated random number (Random2) are returned. The public key of certificate and the value (Random2) of the generated random number are stored.

Time information T1 is used by an operator to judge the cause of trouble when processing does not end normally. However, when no real time clock is installed in SE, time information may not be provided.

A move order is issued to the receiver side after deleting value information in advance, thereby providing a mechanism that there is no double value information and the malicious user cannot gain benefit, so that the service company can provide service safely.

### (Primitive 3 of movement processing)

Primitive name ... Transfer
Input: Message of (7) ... MoveOffer, Random2
Output: Message of (8) ... Sign_SE2 (TRANSFER, TicketV, Random2,T2)

Processing ... processing of SE2 of the ticket sender side. Comparison between the value of Random 1 included in MoveOffer and the value generated by StartTransfer is performed to verify. When it is correct, the signature of MoveOffer is verified by the public key obtained by StartTransfer. When it is correct, the value of Movedata included in MoveOffer is stored as new TicketV. When processing ends normally, data (TRANSFER, TicketV, Random2, T2) where a signature is placed to the object of signature, the registered TicketV, input Random2, and data combined with time information T2 managed by SE2 is returned.

Time information T2 is used by the operator to judge the cause of trouble when processing does not end normally. However, when no real time clock is installed in SE, time information may not be provided.

### (Primitive 4 of movement processing)

Primitive name ... Receipt
Input: Message of (9) ...Sign_SE2(TRANSFER, TicketV, Random2,T2)
Output: Message of (10) ... ACK

Processing ... processing of SE1 of the ticket receiver side. Comparison between the values of Random 2 and TicketV included in input data and the value generated by Instruction is performed to verify. When it is correct, the object of the signature included in input data is verified. When it is correct, the signature of input data is verified by the public key obtained by Instruction. When processing ends normally, ACK is returned.

These four primitives are installed, making it possible to transfer the ticket via no server. Moreover, security is ensured using the electronic signature and SE and transfer is performed, with the result that information of transfer source is not left, and this makes it possible to provide a secure transfer service having anonymity.

The primitives are divided according to processing such as downloading, ticket punching, transferring, and the object of the signature included in generated data is different, so that the user cannot use data for the other object.

Moreover, ME 101 as the sender and receiver stores MoveOffer and Sign_SE2(TRANSFER, TicketV, Random2, T2). This can prove what storage processing has be made and to what movement order such storage processing has been made even when trouble occurs.

### <Embodiment 9>

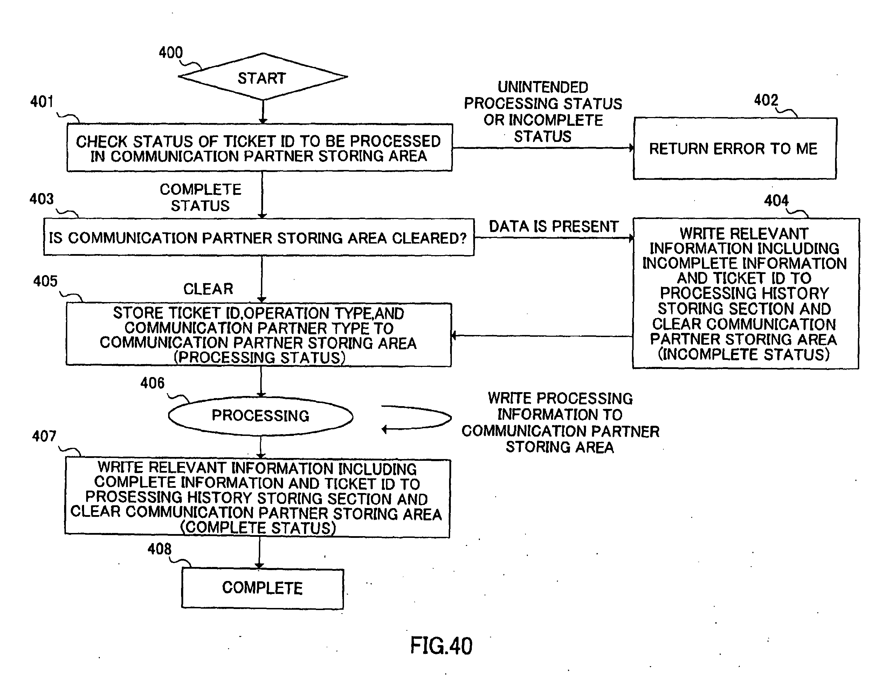

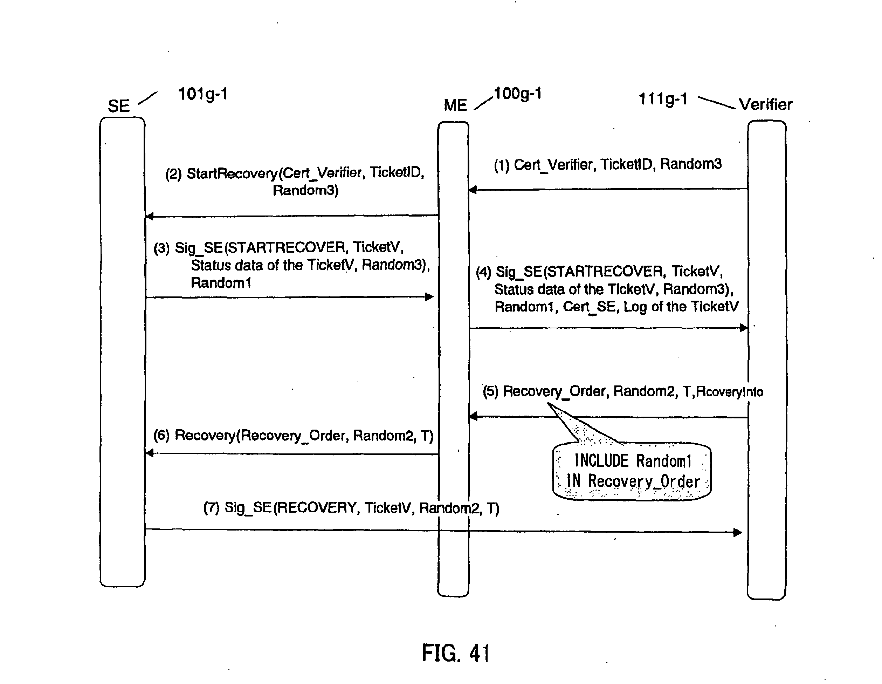

Embodiment 9 will explain the mechanism in which an error, which cannot be judged in Embodiment 6, is automatically recovered by use of FIGS. 40 and 41. For this reason, an error recovery function and a processing history enabling section are newly provided in SE 101g of FIG. 11. When only download processing shown in FIG. 35 and proof processing in FIG. 36 are executed, this embodiment is unnecessary.

First of all, a processing flow of the communication partner management function carried out in SE will be explained using FIG. 40. This flow is started at each operation executing time and is ended at the time of completion. For example, in download processing of FIG. 35, step 400 is started at the time of receiving the message of (2), ticket processing explained in the download processing of FIG. 35 is performed in processing of step 406, step 407 is executed at the time of message transmission of (7), and processing is completed in step 408. The processing history enabling section is provided in SE, and information stored in a communication partner storing area 107g in step 404 or 407 and status of the processing are stored therein as history information. For this reason, the user cannot gain unauthorized access to rewrite conveniently, making it possible to prevent illegality. Moreover, information items of download processing, ticket punch processing and transfer processing in connection with the same ticket separately managed, making it possible to detect illegality across processing. Moreover, in step 401, control of which such as error ticket in ticket punch processing cannot be subjected to movement processing can be performed, making it possible to prevent trouble in advance.

Information to be stored in the communication partner storing area 107g includes the ticket ID, type of operations (primitives), type of communication partners (type information of issuer, verifier and the like), public key of the communication partner, data (generated random number) in processing, and message that provides proof. Among these, all may be stored to the processing history enabling section or the part thereof may be stored thereto. This makes it possible to provide the error recovery function according to the memory size of SE.

If there is uncompleted processing data in the communication partner storing area of SE at the time when PTD is turned ON or SE is inserted, or the ticket application is stated, a function of storing data to an uncompleted history is provided in some cases.

Regarding when history information should be stored, the user may set it, decide a period, or decide the maximum number of storages. There can be considered that the service in which the ticket service provider sucks up this history information periodically to provide a backup service. This makes it possible for the user to receive the service without being conscious of the memory management. Moreover, the ticket service provider can total user's use history.

An explanting will be next given of processing for automatically performing error recovery by use of FIG. 41. In FIG. 40, a service terminal that performs error recovery is called Verifier 111g-1. This processing uses the communication partner management function, which SE has, and the function of managing the message in processing, which ME 100g-1 has. The ME 100g-1 stores the message in ticket processing, for example, Trans_Order and the message of (7) in the ticket punch processing of FIGS. 37 and 38 and MoveOffer and the message of (8) in ticket movement processing of FIG. 39, and has a function that can search data including a value of TicketID when the value is designated. Since these history data items are on ME, it can be considered that the user deletes them at his/her discretion, however, if the user deletes them, this will put him/her a great disadvantage in error recovery processing, so that it cannot be considered that the user deletes them at his/her discretion.

In this processing, two primitives are used. By defining the primitive of error recovery, compatibility between application and SE can be secured.

### (Primitive 1 of error recovery)

Primitive name: StartRecovery
Input: message of (2) ... Cert_Verifier, TicketID, Random3
Output: message of (3) ... Sign_SE(STARTRECOVER, TicketV, Status_data of the TicketV, Random3), Random1

Processing ... The input certificate is verified. When it is correct, data where an electronic signature is generated in data (STARTRECOVER, TicketV, Status, Random3), which includes the object of signature, the value of TicketV designated by TicketID, processing history Status_data of the TicketV relating to the TicketV and input Random3, and newly generated random number Random1 are returned. The public key of certificate and the value of the generated random number (Random2) are stored.

The ME 100g-1, which has received the message of (3), searches data including the value designated by TicketID from the history of ticket processing data stored in ME, and when it is searched, the history data (Log of the TicketV) and the certificate of SE as (4) of the message are transmitted to the verifier together with data of (3).

The verifier verifies the value of Random3 included in Sign_SE(STARTRECOVER, TicketV, Status_data of the TicketV, Random3), and when it is correct, the verifier verifies the signature. When it is correct, cause of error is isolated from ticketV included in Sign_SE(STARTRECOVER, TicketV, Status_data of the TicketV, Random3), Status_data of the TicketV and history data.

In the case of isolating the error of ticket movement processing shown in FIG. 37, messages (1) to (4) are provided to both the SE as the moving source and the SE as the moving destination. Accordingly, in connection with movement processing, the circumstance of error can be correctly grasped to judge.

Here, in some cases, it can be judged that target TicketV is not stored in this SE since transfer processing is performed immediately after normal storage in ticket download processing. Or, it is understood that storage processing really fails for some reason at the downloading time and TicketV is not stored in SE.

Similarly, in some cases, it can be judged that ticket processing is normally performed in the ticket punch processing and one cannot pass the thicket gate due to mechanical trouble of the ticket punching machine. Or, it is understood that ticket punch processing is not yet performed.

Similarly, it can be understood that ticket movement processing is normally performed i'n transfer processing but SE as the receiver side further performs transfer processing and target TicketV is correctly registered to the SE as the sender side and the SE as the receiver side. Or, it can be understood that the sender side has already performed movement processing but storage is not made to the SE as the receiver side for some error. Or, it can be understood that movement processing is not yet started.

The verifier generates Recovery_Order according to the cause of trouble.

Recovery_Order can be expressed by Sign_Verifier(RECOVER, TicketV, Status_data of the TicketV, Random1). When a change in TicketV of SE is needed, a value of corrected TicketV is put. When a change in TicketV of SE is not needed, the same value as the current value is put. When a change in Status_data of the TicketV is needed, a change is added to the changed Status_data of the TicketV.

The verifier further generates a random number Random2, and transmits it to ME as the message (5) together with time information T managed by the verifier and Recovery_Order.

In the message (5), data Recovery_Info, which explains the contents of error to the user, may be included. There is a case in which Recovery Info is data with a signature. When Recovery_Info is included, ME presents data for explanation to the user. This makes it possible for the user to know where the cause of error is and what recovery processing will be carried out and to receive the service safely.

### (Primitive 2 of error recovery)

Primitive name ... Recovery
Input: message of (6) ... Recovery_Order, Random2, T
Output: message of (7) ... Sign_SE(RECOVERY, TicketV, Random2, T)

Processing ... Comparison between Random1 generated by StartRecovery and the value of the random number included in Recovery_Order to verify. When it is corrected, the signature of data with input signature (Recovery_Order) is verified by the public key obtained by StartRecovery. When it is correct, the value of TicketV designated by Recovery_Order is updated to a designated value, and history information of corresponding processing status is also rewritten to Status_data of the TicketV. Data where an electronic signature is placed to data (RECOVERY, TicketV, Random2, T), which includes the object of the signature, the value of the updated TicketV, input Random2 and T, is returned.

Since processing is performed to be related to the random number value, replacement attack at the communication path can be prevented and secure recovery processing can be carried out. Since causes of various troubles are analyzed by this processing to attain recovery, this is efficient. Moreover, the verifier of this processing can be installed as an error recovery terminal by which the user moves to a close distance and executes the service, and this can be installed as one server on the network, so that the service provider can have a degree of flexibility in installment and the user can also select convenient one according to the circumstances. Moreover, since the primitive of error recovery is defined, compatibility between the application and SE can be secured.

### <Embodiment 10>

Embodiment 10 will explain an example using a common key associated with the ticket ID by use of FIGS. 35 to 41.

Embodiments 8 and 9 have proposed the method using the public key encryption system, however, the method using the common key can be considered. When the common key is a common secret key, key information is encrypted by the pubic key at the transmission destination and the result is transmitted. Data with signature explained in Embodiment 9 is encrypted by the common key in place of the signature and the result is received and transmitted. When the common key is a common pubic key pair, data is received and transmitted by encryption or the signature. In either case, when the common key is transmitted, common secret key information is encrypted by the secret key at the transmission destination and the result is transmitted. Data is encrypted by the partner's public key and the result is transmitted. In addition, the common public key may not be encrypted. Data with signature explained in Embodiment 9 is encrypted by the common pubic key or common secret key in place of the signature and the result is received and transmitted.

In the case of download processing of FIG. 35, common key information encrypted by the pubic key of SE is included in ticket data with the signature of issuer of message (5). SE, which has received message (6) decrypts the common key and stores it to be associated with the corresponding ticket. As a result, SE does not have to processing using PKI such as certificate verification in the afterward processing using this ticket.

After performing mutual authentication with the verifier, the issuer transmits the common key encrypted by the pubic key of the verifier to be associated with the ticket ID. This eliminates the need for verifying SE certificate for each SE at the ticket punching time.

In the case of processing of FIG. 36, message (3) may output data encrypted by the common key corresponding to the ticket ID in place of the signature of SE, or signed data.

In the case of ticket punch processing of FIG. 37, messages (1) to (4) are unnecessary. Or, Random of message (3) and that of message (4) may be present. Or, only ticket ID may be sent in messages (1) and (2), and Random is encrypted by the common key associated with the ticket ID and the result may be sent in messages (3) and (4).

Trans_Order of message (5) may be one that is encrypted by the common key corresponding to the ticket ID in place of the signature by the key of the verifier, or one to which the signature is added. Moreover, message (7) generated by SE may be one that is encrypted by the corresponding common key in place of addition of the signature of SE, or one to which the signature is added. This makes it possible to reduce the number of messages by four, and to execute high-speed processing.

In the case of ticket punch processing of FIG. 38, Cert_Verifier of message (2) is unnecessary. Moreover, data Sig_SE(PRESENTATION, TicketV, Random3) of message (3) may be one that is encrypted by the common key corresponding to the ticket ID in place of the signature by the key of SE, or one to which the signature is added. Messages (5) to (7) are the same as the explanation of FIG. 37. This makes it possible to omit heavy load processing such as verification of certification.

In the case of movement processing of FIG. 39, processing is the same as one up to message (5). After receiving message (5), SE generates a common key and performs transmission including data of the common key encrypted by the secret key of SE2 to MoveOffer. SE2, which has received message (7), decrypts the common key encrypted by the secret key of SE2, and message (8) may be encrypted by the received common key in place of the signature by the secret key of SE2, or the signature may be added thereto. Message (10) is the same as the above.

In the case of FIG. 41, Cert_Verifier of message (2) is unnecessary. Moreover, data Sig_SE of message (3) may be one that is encrypted by the common key corresponding to the ticket ID in place of the signature by the key of SE, or one to which the signature is added. Recovery_Order of message (5) may be one that is encrypted by the common key corresponding to the ticket ID in place of the signature by the key of the verifier, or one to which the signature is added. Moreover, message (7) generated by SE may be one that is encrypted by the corresponding common key in place of the signature of SE, or one to which the signature is added.

In this way, the use of common key associated with the ticket ID makes it possible to omit pubic key encryption processing such as verification of certificate by SE, and to provide the ticket service in which a load to SE is light and processing is fast.

### <Embodiment 11>

Embodiments 8, 9, 10 have shown the example in which the self-generated random number is transmitted separately from data where a signature is placed to processing data including the random number sent from the partner or encryption is provided thereto in the processing message. However, in addition to processing data including the random number sent from the partner, it is possible to transmit not only the self-generated random number but also data subjected to the signature and encryption.

For example, message (3) of FIG. 35 has shown Sig_SE(STARTREG, Random1) and Random2, but Sig_SE(STARTREG, Random1, Random2) may be possible. This makes it possible to detect the replacement of the random number.

As explained above, according to the present invention, the plurality of service server operators shares the SE issuing cost to make it easy to provide a secure mobile service using SE. Moreover, since only the person, who has the certificate issued by the service manager, can provide the service using SE, it is possible to prevent the user, who does not pay the cost of SE, from using SE.

Moreover, according to the present invention, since access to the service item registration area of SE can be limited by the kind of certificate issued by the service manager, limitation of right can be set by company. Furthermore, it is possible to perform flexible management such as a change in an issue fee according to the kind of service certificate to be issued.

Moreover, according to the present invention, the service company can add the service, which the user requests, to once issued SE securely at a remote site. As a result, the service manager can flexibly perform issue management of SE 101. Since the user can also add only the necessary service later, the convenience can be improved. Furthermore, since the service server can also add the service, which is started later, to SE 101, which the user already possesses, the market is expanded.

Moreover, according to the present invention, since the interface for SE is public, the user can receive a favorable service using any SE-capable cellular phone by inserting the purchased SE thereto.

Furthermore, according to the present invention, regarding even the ticket, which does not include information peculiar to SE, the main body of ticket data can be stored to the memory excepting SE without being encrypted.

Moreover, according to the present invention, the user can copy ticket data freely and attach it to mail, and transmit it to the friend. When wishing to hand the ticket over the friend, the operator first transmits the ticket to the friend by mail and the like and can perform actual processing for ticket movement after the friend views data.

Furthermore, according to the present invention, since a valid ticket can be attained when the user, who wishes to purchase such data, finishes payment processing as information designated after transmission of ticket data to the user by mail and the like at the ticket issuing time, the issuer server can increase the degree of freedom of the ticket promotion. Moreover, the issuer server does not have to issue and manage the numbered ticket before payment and the ticket after payment, separately.

Moreover, according to the present invention, when the service server wishes to confirm whether the specific service item is registered in SE, confirmation can be carried out by data with the signature of SE including the random number issued by the service server.

Furthermore, according to the present invention, in connection with ticket punching and service item movement processing between SEs, only information registered in the service registration area may be transmitted, so that an amount of data communication can be reduced.

Moreover, according to the present invention, in service item movement processing between SEs, movement of service item between SEs may be possible without presence of the service item in two SEs of the moving destination and the moving source simultaneously.

Furthermore, according to the present invention, even in the market where SEs having various kinds of performance are mixed according to an increase in the function of SE, it is possible to deal with performance without changing the interface on the service server side.

Moreover, according to the present invention, it is possible to perform secure ticket transfer between SEs via no server. Even if transfer is performed, privacy is maintained and the amount of ticket data is not increased since transfer history is not added.

Furthermore, according to the present invention, the random number generated by SE is issued to be included in the part of value information of ticket data at the ticket issuing time. This provides a mechanism that can cope with the phone tapping via the communication path and the replacement attack.

Moreover, according to the present invention, storage to SE is performed to exclude the signature of the sender side added to ticket punch essential information, and the signature of SE is added at the ticket using time. For this reason, ticket data once stored to the SE cannot be output externally without the signature of SE. Moreover, in data with the signature, the object of processing is included. For this reason, it is possible to implement the service using the small amount of SE area by use of the open PKI mechanism.

Furthermore, according to the present invention, there was a problem in the load of payment processing at the time of selling the popular tickets. According to this system, since the ticket does not become valid unless processing for registering the ticket punch essential section to SE is performed, ticket data (user display section) can be used in common between the numbered ticket and the present ticket. For this reason, the load of payment processing can be spread using the numbered ticket without increasing time and effort in the issuing management.

Moreover, according to the present invention, error recovery processing can be automatically performed using the protocol of the error recovery using SE to make it possible to reduce time and labor. of maintenance. According to the protocol of the error recovery, it is possible to detect the error and illegality across the ticket operations and recover them. Further, it is possible to provide the error recovery service locally and remotely.

This application is based on the Japanese Patent Application Nos. 2002-069362 filed on March 13, 2002 and 2003-007684 filed on January 15, 2003, entire content of which is expressly incorporated by reference herein.

## Claims

1. A service execution module, which is a module that stores information for executing service wherein said module is formed of a resistant tamper storage medium, comparing:
service application storing means for storing an application for executing said service;
service manager certificate storing means for storing a service manager certificate, which is a certificate of a service manager who manages said service; and
service item storing means for storing a service item, which is information necessary to execute said service.

2. The service execution module according to claim 1, wherein a service server certificate is received from a service server that is a service providing source, the service server certificate is verified using the service manager certificate, and when verification succeeds, the relevant service is executed using the service item.

3. The service execution module according to claim 1, wherein said service application storing means stores an additional service information storage application for additional service information, which is information for executing an additional service that is a service to be newly added, said service manager certificate storing means stores an additional service information issuing manager certificate, which is a certificate of the additional service information issuing manager, who manages the issue of the additional service information, said service item storing means stores an additional service information storage item that is information necessary to store the additional service information, and an additional service information providing server certificate is received from an additional service information providing server that is a providing source of additional service information, the additional service information providing server certificate is verified using the additional service information issuing manager certificate, when verification succeeds, an additional service application for executing the additional service, an additional service manager certificate that is a certificate of the additional service manager, who manages the additional service, and an additional service item necessary to execute the additional service are stored using the additional service information storage item.

4. The service execution module according to claim 1, wherein an issuer server certificate is received from an issuer server that issues ticket data, the issuer server certificate is verified using a service manager certificate, and when verification succeeds, a part or all of information described in ticket data is stored to the service item storing means.

5. The service execution module according to claim 4, wherein data transmission and reception to/from a service data storing area, which is a non-resistant tamper storage medium, can be directly or indirectly performed, issued ticket data is stored in the service storing area, and among the ticket data, information necessary for ticket punch processing is stored to the service item storing means.

6. The service execution module according to claim 4, wherein a ticket punching machine certificate is received from a ticket punching machine that performs ticket punch processing of ticket data, the ticket punching machine is verified using the service manager certificate, and when verification succeeds, the relevant ticket punch processing is performed using the service item.

7. The service execution module according to claim 4, wherein ticket data has ticket punch essential information including a ticket ID, time information on ticket punch and/or spatial information on ticket punch, any one of a signature of an issuer that has issued ticket data, a signature of the ticket punching machine that performs ticket punch processing to ticket data, or a signature of the service execution module itself is placed to the ticket punch essential information.

8. A service execution module, which is a module that has a secure area, which is a resistant tamper storage area, and which executes an arbitrary service, comparing:
public key storing means for storing a service manager public key that is a pubic key of a service manager who manages the service;
item storing means for storing a service item that is information necessary for executing the service; and
processing control means for controlling processing in said public key storing means, said item storing means and the relevant module.

9. The service execution module according to claim 8, wherein when receiving a registration request of service information from an issuing main body that issues the service information that is information on the service, said processing control means verifies an issuer certificate that is included in the registration request and signed by a service manager using a service manager pubic key, thereafter to receive the service information, and extracts a service item included in the service information to store to said item storing means after verifying signature information included in the service information using a secret key of said processing control means itself.

10. The service execution module according to claim 9, further comprising:
a normal area that is a non- resistant tamper storage area; and
second information storing means for storing second information, which is information excepting at least the service item among the service information, in said normal area.

11. The service execution module according to claim 10, wherein when transfer information, which is information of a part or all of a certain service item, is transferred, second information corresponding to the service item is transmitted to a partner of transfer processing before the transfer processing of transfer information.

12. The service execution module according to claim 10, wherein when purchase information, which is information of a part or all of a certain service item, is purchased, second information corresponding to the service item is received from a partner of purchase processing before the purchase processing of purchase information.

13. The service execution module according to claim 10, further comprising:
in a secure area, communication partner storing means for storing information on a communication partner to execute and process the service; and
processing history storing means for storing a history of processing to the communication partner.

14. The service execution module according to claim 13, further comprising message history storing means for storing a history of a processing message from the communication partner in the normal area.

15. The service execution module according to claim 14, wherein when detecting a certain processing error, said control means obtains a processing message on the processing from said message history storing means and responds to the message again.
